# EUROPEAN PATENT SPECIFICATION

(11) **EP 3 648 509 B1**
(45) Date of publication and mention of the grant of the patent: **06.10.2021**
(21) Application number: 17921303.8
(22) Date of filing: 11.08.2017
(51) Int. Cl.: H04W 36/00, H04W 88/02

(54) **CONFIGURATION OF MEASUREMENT REPORTING ACCORDING TO THE HEIGHT**
KONFIGURIERUNG VON MESSWERTBERICHTEN GEMÄSS DER HÖHE
CONFIGURATION DE RAPPORTS DE MESURE SELON L'HAUTEUR

(43) Date of publication of application: 06.05.2020
(73) Proprietor: Huawei Technologies Co., Ltd., Longgang District Shenzhen, Guangdong 518129 (CN)
(72) Inventor: TANG, Xun, Shenzhen Guangdong 518129 (CN); QUAN, Wei, Shenzhen Guangdong 518129 (CN); ZHANG, Jian, Shenzhen Guangdong 518129 (CN); CHAI, Li, Shenzhen Guangdong 518129 (CN); MIAO, Jinhua, Shenzhen Guangdong 518129 (CN)
(74) Representative: Pfenning, Meinig & Partner mbB
(86) International application number: PCT/CN2017/097271
(87) International publication number: WO 2019/028915

(56) References cited:
- WO-A1-2010/105416
- WO-A1-2018/167351
- CN-A- 101 453 770
- CN-A- 103 079 225
- US-A1- 2010 113 009
- US-A1- 2014 248 885
- SAMSUNG: "Measurement related clarifications", 3GPP DRAFT; R2-087361 MEASUREMENT RELATED CLARIFICATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081114, 14 November 2008 (2008-11-14), XP050321863, [retrieved on 2008-11-14]
- KDDI: "Proposal of potential LTE enhancements for Aerial Vehicles", 3GPP DRAFT; R2-1705999_PROPOSAL OF POTENTIAL LTE ENHANCEMENTS FOR AERIAL VEHICLES, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG2, no. Hangzhou, China; 20170515 - 20170519 19 May 2017 (2017-05-19), XP051285864, Retrieved from the Internet: URL:http://www.3gpp.org/ftp/tsg_ran/WG2_RL 2/TSGR2_98/Docs/ [retrieved on 2017-05-19]

## Description

### TECHNICAL FIELD

Embodiments of this application relate to the communications field, and in particular, to a measurement reporting method and an apparatus.

### BACKGROUND

Document SAMSUNG, "Measurement related clarifications", 3GPP DRAFT; R2-087361 MEASUREMENT RELATED CLARIFICATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20081114), Prague, Czech Republic; 20081114, describes a concept for providing measurement reports.

Document US 2014/248885 A1 describes a wireless communications apparatus configured to operate in a cellular communications network, the apparatus comprising a measurement unit operable to perform a measurement on performance of said apparatus in said cellular network, trigger event defining means operable to define a trigger event on the basis of at least one measurement and at least two parameters, one of said parameters being a trigger event time parameter being an indication of a time period over which a trigger event must be satisfied, another of said parameters being a configuration parameter for configuring the trigger event, a measurement controller operable to determine, on the basis of said measurement, if said trigger event has been satisfied over the trigger time period and, in the event that said trigger event has been satisfied over the time period, to emit a measurement report comprising performance information for a cell in which the apparatus is operational in use, wherein the configuration parameter is scalable dependent on speed of said apparatus.

Document KDDI, "Proposal of potential LTE enhancements for Aerial Vehicles", RAN WG2, Hangzhou, China; 20170515 - 20170519, (20170519), 3GPP DRAFT; R2-1705999_PROPOSAL OF POTENTIAL LTE ENHANCEMENTS FOR AERIAL VEHICLES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20170519), describes potential LTE enhancements for aerial vehicles

Document WO 2018/167351 A1 (prior art falling under Article 54(3) EPC) describes a method comprising: receiving, by a serving network node, from a terminal device, a plurality of reports comprising at least one indication of signal reception quality; determining, by the serving network node, an altitude position state of the terminal device based on comparing the at least one indication of the signal reception quality of the plurality of reports to a comparison model or based on comparing cells in the plurality of reports to information of cells in a certain area, and requesting more reports from the terminal device for improved certainty of the determining, if needed, and transmitting, as a part of a handover process, the determined altitude position state of the terminal device to a handover target network node.

In an existing wireless communications system, after a terminal establishes a communication connection to a base station, the terminal enters a connected (Connected) mode. To enable the terminal to obtain optimal communication quality, the base station needs to perform measurement configuration on the terminal. The terminal measures a neighboring cell of a serving cell according to the measurement configuration performed by the base station, to obtain a measurement result of the neighboring cell, and reports a measurement result to the base station. The serving cell is a cell that provides a communications service for the terminal. Measurement reporting includes periodic measurement reporting and event trigger reporting. During periodic measurement reporting, the base station configures a reporting period and a quantity of reporting times for the terminal, and the terminal periodically reports a neighboring cell measurement result to the base station. During event trigger reporting, the base station configures a measurement event for the terminal, and if a neighboring cell measurement result meets a measurement event reporting condition, the terminal reports a corresponding measurement event to the base station. For example, the terminal updates a list of neighboring cells in which the event is triggered and reporting is triggered, selects, in descending order of signal strength of the neighboring cells, L neighboring cells from the list of the neighboring cells in which reporting is triggered, and sends a measurement result of each of the L neighboring cells to the base station. However, if a plurality of neighboring cell measurement results obtained by the terminal through measurement all can meet the measurement event reporting condition, each time a measurement result of a new cell meets the measurement event reporting condition, the terminal needs to report the measurement result of the cell to the base station. This causes frequent reporting by the terminal and a waste of signaling resources.

### SUMMARY

Embodiments of the invention are defined in the appended claims, which provide measurement reporting methods and an apparatus according to the independent claims, to resolve a waste of signaling resources that is caused by reporting measurement results of a plurality of neighboring cells by a terminal when the measurement results that are of the plurality of neighboring cells and that are obtained by the terminal through measurement meet a measurement event reporting condition.

To resolve the foregoing technical problem, the embodiments of this application provide the following technical solution:
A measurement reporting method, comprising: receiving, by a terminal, measurement configuration information sent by a network device, wherein the measurement configuration information is for reporting a neighboring cell measurement result by the terminal, and the measurement configuration information comprises at least one of timer configuration information, height configuration information, and speed configuration information; and measuring, by the terminal, a neighboring cell, and reporting a measurement report to the network device according to the measurement configuration information, wherein the measurement report comprises a measurement result of at least one neighboring cell, the measurement result of the at least one neighboring cell meets a first condition, and the first condition is a measurement event entering condition or a measurement event leaving condition; wherein when the measurement configuration information comprises the height configuration information, the measuring, by the terminal, a neighboring cell, and reporting a measurement report to the network device according to the measurement configuration information specifically comprises: determining, by the terminal, a height of the terminal, and determining a first reporting trigger time hysteresis value according to the height; and reporting, by the terminal, the measurement report to the network device when the terminal determines that duration in which a measurement result of a first neighboring cell meets the first condition reaches the first reporting trigger time hysteresis value, wherein the measurement report comprises the measurement result of the first neighboring cell; wherein the height configuration information comprises height information, a second reporting trigger time hysteresis value, and an adjustment factor corresponding to the height information, the height information comprises a plurality of height ranges, and at least one of the plurality of height ranges corresponds to the adjustment factor; and wherein the determining, by the terminal, a height of the terminal, and determining a first reporting trigger time hysteresis value according to the height specifically comprises: determining, by the terminal, that the height is within a first height range in the plurality of height ranges, wherein the first height range corresponds to the adjustment factor, and determining the first reporting trigger time hysteresis value according to the adjustment factor and the second reporting trigger time hysteresis value; or determining, by the terminal, that the height is within a second height range in the plurality of height ranges, wherein the second height range corresponds to the second reporting trigger time hysteresis value, and the first reporting trigger time hysteresis value is equal to the second reporting trigger time hysteresis value.

A first example provides a measurement reporting method is provided, including: After receiving measurement configuration information sent by a network device, a terminal measures a neighboring cell, and reports a measurement report to the network device according to the measurement configuration information. A report configuration part in the measurement configuration information is used to instruct the terminal to report a measurement result of the neighboring cell. The measurement configuration information includes at least one of timer configuration information, height configuration information, and speed configuration information. The measurement report includes a measurement result of at least one neighboring cell, and the measurement result of the at least one neighboring cell meets a first condition. The first condition is a corresponding measurement event entering condition or measurement event leaving condition of a measurement identification (identification, ID); or the first condition is further constrained as follows: The measurement result of the at least one neighboring cell is a measurement result that is obtained after layer 3 filtering and that continuously meets the measurement event entering condition or the measurement event leaving condition within a hysteresis time range. In the examples of this application, the foregoing two cases are collectively referred to as the following:
A measurement result meets the first condition. According to the measurement reporting method in this example, when the terminal learns, through measurement, that measurement results of a plurality of neighboring cells meet the first condition, and needs to report one measurement report to the network device for a measurement result of each neighboring cell, the terminal may adjust, according to any combination of the timer configuration information, the height configuration information, and the speed configuration information, a quantity of times for which the terminal reports the measurement report to the network device. Therefore, this effectively reduces signaling resources required by the terminal to frequently report the measurement results of the plurality of neighboring cells.

With reference to the first example, in a possible implementation, when the measurement configuration information includes the timer configuration information, that a terminal measures a neighboring cell, and reports a measurement report to the network device according to the measurement configuration information specifically includes: For one measurement ID, the terminal starts a timer when a neighboring cell measurement result meets the first condition. When the terminal determines that a quantity of neighboring cells whose measurement results meet the first condition reaches a first threshold N when the timer is in a running state, the terminal stops the timer, and reports the measurement report to the network device. The measurement report includes the measurement results of the N neighboring cells, and N is a positive integer. Therefore, the terminal reports the measurement results of the N neighboring cells to the network device after obtaining the measurement results of the N neighboring cells within a running time period of the timer. In this case, the terminal reports the measurement results of the N neighboring cells to the network device by using only one piece of signaling. Compared with a prior-art method for reporting the measurement results of the N neighboring cells to the network device by using N pieces of signaling, the measurement reporting method in this example reduces an amount of signaling required by the terminal to report measurement results of a plurality of neighboring cells, and effectively reduces a waste of signaling resources. Alternatively, the terminal reports the measurement report to the network device when the terminal determines, according to timer duration, that the timer expires. The measurement report includes the measurement result that is of the at least one neighboring cell and that meets the first condition when the timer is in a running state. Therefore, after the timer expires, regardless of a quantity of neighboring cells whose measurement results are obtained by the terminal, the terminal reports all obtained measurement results of neighboring cells to the network device. This avoids a reporting delay caused by waiting for a long time by the terminal to obtain the measurement results of the N neighboring cells.

It should be noted that the timer described in this example is configured according to the timer configuration information. The timer configuration information includes the timer duration, in other words, a running time length of the timer. The first threshold N is preconfigured for the terminal before the terminal performs measurement reporting. The first threshold N may be specified or predefined in a protocol, or the first threshold N may be configured by the network device for the terminal by using the measurement configuration information or other signaling.

To use the timer to reduce a long-time delay required when the terminal reports measurement results of a plurality of neighboring cells, with reference to the foregoing possible implementation, in another possible implementation, that a terminal measures a neighboring cell specifically includes: The terminal starts the timer when determining that a measurement result of a neighboring cell meets the first condition. It should be noted that a timer start moment, a timer timeout condition, and a timer stop condition may also be preconfigured (in other words, stipulated in the protocol) before the terminal performs measurement reporting, and do not need to be configured by the network device for the terminal by using signaling. However, alternatively, the timer start moment, the timer timeout condition, and the timer stop condition may be configured by the network device for the terminal by using the measurement configuration information or other signaling. For example, the timer start moment, the timer timeout condition, and the timer stop condition may be added to the timer configuration information for configuration for the terminal, or may be configured for the terminal by using other signaling sent by the network device to the terminal.

In addition, the timer configuration information and/or the first threshold N may be configured for a measurement identification in the measurement configuration information. In other words, a combination of one measurement frequency and one measurement event corresponds to one piece of timer configuration information and/or the first threshold N. Alternatively, the timer configuration information and/or the first threshold N may be configured for a measurement object identifier in the measurement configuration information. In other words, different events of a same frequency correspond to one piece of timer configuration information and/or the first threshold N. Alternatively, the timer configuration information and/or the first threshold N may be configured for a report configuration identifier in the measurement configuration information. In other words, different frequencies of a same event correspond to one piece of timer configuration information and/or the first threshold N. Alternatively, the timer configuration information and/or the first threshold N may be configured for the terminal. In other words, the terminal reports all measurement events by sharing one timer and/or the first threshold N.

With reference to the first example, in another possible implementation, when the measurement configuration information includes the height configuration information, that a terminal measures a neighboring cell, and reports a measurement report to the network device according to the measurement configuration information specifically includes: determining, by the terminal, a height of the terminal, and determining a first reporting trigger hysteresis value according to the height; and reporting, by the terminal, the measurement report to the network device when the terminal determines that duration in which a measurement result of a first neighboring cell meets the first condition reaches the first reporting trigger hysteresis value. The measurement report includes the measurement result of the first neighboring cell. The measurement result of the first neighboring cell may be understood as a measurement result of any neighboring cell that is obtained by the terminal through measurement. Therefore, the terminal determines the first reporting trigger hysteresis value by using a current height of the terminal, and reports the measurement result of the first neighboring cell to the network device only when determining that the duration in which the measurement result of the first neighboring cell that is obtained through measurement meets the first condition reaches the first reporting trigger hysteresis value. Because different hysteresis values are used for different heights, a larger hysteresis value may be set when the terminal is at a relatively high height. In this case, the terminal delays a moment of reporting the measurement result of the first neighboring cell. Compared with a prior-art method in which only one hysteresis value is used for different heights, in the measurement reporting method in this example, a moment at which the terminal reports a neighboring cell measurement result is delayed by setting different hysteresis values for different heights of the terminal, an amount of signaling used by the terminal to report measurement results of a plurality of neighboring cells is indirectly reduced, and a waste of signaling resources is effectively reduced.

To effectively reduce the waste of signaling resources by delaying the moment at which the terminal reports a neighboring cell measurement result, for example, the terminal may determine the first reporting trigger hysteresis value according to the height of the terminal in the following implementations:

With reference to the foregoing possible implementations, in another possible implementation, the height configuration information includes height information and a reporting trigger hysteresis value corresponding to the height information, the height information includes a plurality of height ranges, and the plurality of height ranges each correspond to one reporting trigger hysteresis value. The determining, by the terminal, a height of the terminal, and determining a first reporting trigger hysteresis value according to the height specifically includes: determining, by the terminal, that the height of the terminal is within a first height range in the plurality of height ranges. The first height range corresponds to the first reporting trigger hysteresis value. Therefore, the terminal may determine the first height range in the plurality of height ranges according to the current height of the terminal, and further use the first reporting trigger hysteresis value corresponding to the first height range as a delay required when the terminal delays reporting the measurement result of the first neighboring cell. In this case, reporting is triggered only when the duration in which the measurement result of the first neighboring cell continuously meets the first condition reaches the first reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced.

With reference to the foregoing possible implementations, in another possible implementation, the height configuration information includes height information, a second reporting trigger hysteresis value, and an adjustment factor corresponding to the height information, the height information includes a plurality of height ranges, and at least one of the plurality of height ranges each corresponds to one adjustment factor. The determining, by the terminal, a height of the terminal, and determining a first reporting trigger hysteresis value according to the height specifically includes: determining, by the terminal, that the height is within a first height range in the plurality of height ranges, where the first height range corresponds to a first adjustment factor, and determining the first reporting trigger hysteresis value according to the first adjustment factor and the second reporting trigger hysteresis value. Therefore, the terminal may determine the first height range in the plurality of height ranges according to the current height of the terminal, further adjust the second reporting trigger hysteresis value by using the first adjustment factor corresponding to the first height range, to obtain the first reporting trigger hysteresis value, and use the first reporting trigger hysteresis value as a delay required when the terminal delays reporting the measurement result of the first neighboring cell. In this case, reporting is triggered only when the duration in which the measurement result of the first neighboring cell continuously meets the first condition reaches the first reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced. Alternatively, the terminal determines that the height is within a second height range in the plurality of height ranges. The second height range corresponds to the second reporting trigger hysteresis value, and the first reporting trigger hysteresis value is equal to the second reporting trigger hysteresis value. Therefore, the terminal directly uses the second reference reporting trigger hysteresis value as the delay required when the terminal delays reporting the measurement result of the first neighboring cell. In this case, reporting is triggered only when the duration in which the measurement result of the first neighboring cell continuously meets the first condition reaches the second reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced.

With reference to the first example, in another possible implementation, when the measurement configuration information includes the speed configuration information, that a terminal measures a neighboring cell, and reports a measurement report to the network device according to the measurement configuration information specifically includes: determining, by the terminal, a moving speed of the terminal according to a beam change status, and determining a third reporting trigger hysteresis value according to the moving speed; and reporting, by the terminal, the measurement report to the network device when the terminal determines that duration in which a measurement result of a first neighboring cell meets the first condition reaches the third reporting trigger hysteresis value, where the measurement report includes the measurement result of the first neighboring cell. Therefore, the terminal determines a current moving speed of the terminal according to a beam change status, and further determines the third reporting trigger hysteresis value according to the moving speed of the terminal. When determining that the duration in which the measurement result of the first neighboring cell that is obtained through measurement meets the first condition reaches the third reporting trigger hysteresis value, the terminal reports the measurement result of the first neighboring cell to the network device. In this case, the terminal delays a moment of reporting the measurement result of the first neighboring cell. For a prior-art method for estimating a moving speed of the terminal by using only a quantity of cell changes, in this example, a method for estimating a speed status according to a quantity of beam changes can be used as a valid supplement to the existing method. For example, a faster speed of two speeds estimated in two manners is used or a key speed determined in a highest level manner is used. According to the measurement reporting method, by delaying a moment at which the terminal reports a neighboring cell measurement result, an amount of signaling used by the terminal to report measurement results of a plurality of neighboring cells is indirectly reduced, and a waste of signaling resources is effectively reduced.

To effectively reduce the waste of signaling resources by delaying the moment at which the terminal reports a neighboring cell measurement result, for example, the terminal may determine the third reporting trigger hysteresis value according to the moving speed of the terminal in the following implementations:

With reference to the foregoing possible implementations, in another possible implementation, the determining, by the terminal, a moving speed of the terminal according to a beam change includes: determining, by the terminal, the moving speed of the terminal according to a quantity of beam changes within a specific time period. In a beam-based communication scenario, a beam used by the terminal changes as the terminal moves, but a serving cell may remain unchanged. An original method for estimating a speed according to a cell change may not be used. However, it is feasible to estimate a moving speed by using a beam change status.

With reference to the foregoing possible implementations, in another possible implementation, the speed configuration information includes speed information, a fourth reporting trigger hysteresis value, and an adjustment factor corresponding to the speed information, the speed information includes a plurality of speed ranges, and at least one of the plurality of speed ranges each corresponds to one adjustment factor. The determining, by the terminal, a moving speed of the terminal according to a beam change, and determining a third reporting trigger hysteresis value according to the moving speed specifically includes: determining, by the terminal, that the moving speed is within a first speed range in the plurality of speed ranges, where the first speed range corresponds to a second adjustment factor, and determining the third reporting trigger hysteresis value according to the second adjustment factor and the fourth reporting trigger hysteresis value. Therefore, the terminal may determine the first speed range in the plurality of speed ranges according to the moving speed of the terminal, further adjust the fourth reporting trigger hysteresis value by using the second adjustment factor corresponding to the first speed range, to obtain the third reporting trigger hysteresis value, and use the third reporting trigger hysteresis value as a delay required when the terminal delays reporting the measurement result of the first neighboring cell. In this case, reporting is triggered only when the duration in which the measurement result of the first neighboring cell continuously meets the first condition reaches the third reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced. Alternatively, the terminal determines that the moving speed is within a second speed range in the plurality of speed ranges. The second speed range corresponds to the fourth reporting trigger hysteresis value, and the third reporting trigger hysteresis value is equal to the fourth reporting trigger hysteresis value. Therefore, the terminal directly uses the fourth reporting trigger hysteresis value as the delay required when the terminal delays reporting the measurement result of the first neighboring cell. In this case, reporting is triggered only when the duration in which the measurement result of the first neighboring cell continuously meets the first condition reaches the fourth reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced.

With reference to the first example, in another possible implementation, when the measurement configuration information includes a first period, that a terminal reports a measurement report to the network device specifically includes: reporting, by the terminal, the measurement report to the network device according to the first period. The measurement report further includes cell information reported by using at least one trigger measurement event, or includes the cell information reported by using the at least one trigger measurement event and corresponding trigger duration. The trigger duration is continuous duration in which a neighboring cell measurement result obtained by the terminal through measurement already meets the first condition. Therefore, the terminal periodically reports measurement event information of a neighboring cell. This indirectly reduces an amount of signaling used by the terminal to report measurement results of a plurality of neighboring cells, and effectively reduces a waste of signaling resources.

It should be noted that, in the prior art, after the terminal obtains a measurement result of a neighboring cell, if the neighboring cell meets a measurement event entering condition of a specific measurement ID, the terminal first needs to store the measurement result of the neighboring cell in a list that is of the measurement event of the measurement ID and that is of neighboring cells in which reporting is triggered. Before reporting the measurement result of the neighboring cell to the network device, the terminal needs to sort neighboring cell measurement results in the list of the neighboring cells in which reporting is triggered, then obtains, in descending order, measurement results of n neighboring cells from the list of the neighboring cells in which reporting is triggered, and reports the measurement results of the n neighboring cells to the network device. However, if a quantity of neighboring cell measurement results currently obtained by the terminal is less than a quantity of measurement results of first n neighboring cells in the list of the neighboring cells in which reporting is triggered, the measurement results of the n neighboring cells that are reported by the terminal to the network device do not include the currently obtained neighboring cell measurement results. To resolve the foregoing problem, the examples provide the following implementation:

With reference to the foregoing possible implementations, in another possible implementation, before the terminal reports the measurement report to the network device, the method further includes: adding, by the terminal, measurement results of i neighboring cells to the measurement report, where i indicates a quantity of neighboring cells whose measurement results need to be triggered to be reported by the terminal currently, i is a positive integer less than n, and n indicates a preset maximum quantity of neighboring cells whose measurement results are to be reported. Therefore, the terminal does not need to sort the measurement results of the i neighboring cells and measurement results of neighboring cells included in the list of the neighboring cells in which reporting is triggered, and instead, the terminal adds the measurement results of the i neighboring cells to the measurement report, so that the network device can learn of the measurement results that are of the i neighboring cells and that are obtained by the terminal. Alternatively, the terminal adds measurement results of n+j neighboring cells to the measurement report, where n+j indicates a quantity of neighboring cells whose measurement results need to be reported by the terminal currently, n is a preset maximum quantity of neighboring cells whose measurement results are to be reported, and j is a positive integer. Therefore, the terminal adjusts the maximum quantity of measurement results of the neighboring cells that are included in the measurement report to n+j, and adds, to the measurement report, j neighboring cell measurement results that trigger the current reporting, so that the network device can learn of the measurement results that are of the j neighboring cells and that are obtained by the terminal.

A second aspect of the embodiments of this application provides a measurement reporting method, including: sending, by a network device, measurement configuration information to a terminal, where the measurement configuration information is used by the terminal to report a neighboring cell measurement result, and the measurement configuration information includes at least one of timer configuration information, height configuration information, and speed configuration information; and receiving, by the network device, a measurement report reported by the terminal, where the measurement report includes a measurement result of at least one neighboring cell, the measurement result of the at least one neighboring cell meets a first condition, and the first condition is a measurement event entering condition or a measurement event leaving condition. Further, the height configuration information comprises height information, a first reporting trigger time hysteresis value, and an adjustment factor corresponding to the height information, the height information comprises a plurality of height ranges, and at least one of the plurality of height ranges corresponds to the adjustment factor. According to the measurement reporting method in this embodiment of this application, the network device configures the measurement configuration information for the terminal, so that the terminal learns, through measurement, that measurement results of a plurality of neighboring cells meet the first condition. When the terminal needs to report one measurement report to the network device for a measurement result of each neighboring cell, the terminal may adjust, according to any combination of the timer configuration information, the height configuration information, and the speed configuration information, a quantity of times for which the terminal reports the measurement report to the network device. Therefore, this effectively reduces signaling resources required by the terminal to frequently report the measurement results of the plurality of neighboring cells.

With reference to the first example, in another possible implementation, the timer configuration information includes timer duration, the measurement configuration information further includes a first threshold N, and the first threshold N is predefined or is indicated by the network device. Therefore, the terminal reports measurement results of N neighboring cells to the network device after obtaining the measurement results of the N neighboring cells within a running time period of a timer. In this case, the terminal reports the measurement results of the N neighboring cells to the network device by using only one piece of signaling. Compared with a prior-art method for reporting the measurement results of the N neighboring cells to the network device by using N pieces of signaling, the measurement reporting method reduces an amount of signaling required by the terminal to report measurement results of a plurality of neighboring cells, and effectively reduces a waste of signaling resources. After the timer expires, regardless of a quantity of neighboring cells whose measurement results are obtained by the terminal, the terminal reports all obtained measurement results of neighboring cells to the network device. This avoids a reporting delay caused by waiting for a long time by the terminal to obtain the measurement results of the N neighboring cells.

With reference to the first example, in another possible implementation, the height configuration information includes height information and a reporting trigger hysteresis value corresponding to the height information, the height information includes a plurality of height ranges, and the plurality of height ranges each correspond to one reporting trigger hysteresis value. Therefore, the terminal may determine a first height range in the plurality of height ranges according to a current height of the terminal, and further use a first reporting trigger hysteresis value corresponding to the first height range as a delay required when the terminal delays reporting a measurement result of a first neighboring cell. In this case, reporting is triggered only when duration in which the measurement result of the first neighboring cell continuously meets the first condition reaches the first reporting trigger hysteresis value. By delaying a moment at which the terminal reports a neighboring cell measurement result, an amount of signaling used by the terminal to report measurement results of a plurality of neighboring cells is indirectly reduced, and a waste of signaling resources is effectively reduced.

Alternatively, the height configuration information includes height information, a first reporting trigger hysteresis value, and an adjustment factor corresponding to the height information, the height information includes a plurality of height ranges, and at least one of the plurality of height ranges each corresponds to one adjustment factor. Therefore, the terminal may determine a first height range in the plurality of height ranges according to a current height of the terminal, further adjust a second reporting trigger hysteresis value by using a first adjustment factor corresponding to the first height range, to obtain the first reporting trigger hysteresis value, and use the first reporting trigger hysteresis value as a delay required when the terminal delays reporting a measurement result of a first neighboring cell. In this case, reporting is triggered only when duration in which the measurement result of the first neighboring cell continuously meets the first condition reaches the first reporting trigger hysteresis value. By delaying a moment at which the terminal reports a neighboring cell measurement result, an amount of signaling used by the terminal to report measurement results of a plurality of neighboring cells is indirectly reduced, and a waste of signaling resources is effectively reduced. Alternatively, the terminal directly uses the second reference reporting trigger hysteresis value as the delay in which the terminal delays reporting the measurement result of the first neighboring cell. In this case, reporting is triggered only when the duration in which the measurement result of the first neighboring cell continuously meets the first condition reaches the second reporting trigger hysteresis value. By delaying a moment at which the terminal reports a neighboring cell measurement result, an amount of signaling used by the terminal to report measurement results of a plurality of neighboring cells is indirectly reduced, and a waste of signaling resources is effectively reduced.

With reference to the first example, in another possible implementation, the speed configuration information includes speed information, a second reporting trigger hysteresis value, and an adjustment factor corresponding to the speed information, the speed information includes a plurality of speed ranges, and at least one of the plurality of speed ranges each corresponds to one adjustment factor. Therefore, the terminal may determine a first speed range in the plurality of speed ranges according to a moving speed of the terminal, further adjust a fourth reporting trigger hysteresis value by using a second adjustment factor corresponding to the first speed range, to obtain the third reporting trigger hysteresis value, and use the third reporting trigger hysteresis value as a delay required when the terminal delays reporting a measurement result of a first neighboring cell. In this case, reporting is triggered only when duration in which the measurement result of the first neighboring cell continuously meets the first condition reaches the third reporting trigger hysteresis value. By delaying a moment at which the terminal reports a neighboring cell measurement result, an amount of signaling used by the terminal to report measurement results of a plurality of neighboring cells is indirectly reduced, and a waste of signaling resources is effectively reduced. Alternatively, the terminal directly uses the fourth reporting trigger hysteresis value as the delay required when the terminal delays reporting the measurement result of the first neighboring cell. In this case, reporting is triggered only when the duration in which the measurement result of the first neighboring cell continuously meets the first condition reaches the fourth reporting trigger hysteresis value. By delaying a moment at which the terminal reports a neighboring cell measurement result, an amount of signaling used by the terminal to report measurement results of a plurality of neighboring cells is indirectly reduced, and a waste of signaling resources is effectively reduced.

A third aspect of the embodiments of this application provides a communications apparatus, including: a receiving unit, configured to receive measurement configuration information sent by a network device, where the measurement configuration information is used by the communications apparatus to report a neighboring cell measurement result, and the measurement configuration information includes at least one of timer configuration information, height configuration information, and speed configuration information; a processing unit, configured to measure a neighboring cell, and generate a measurement report according to the measurement configuration information; and a sending unit, configured to report the measurement report to the network device, where the measurement report includes a measurement result of at least one neighboring cell, the measurement result of the at least one neighboring cell meets a first condition, and the first condition is a measurement event entering condition or a measurement event leaving condition. Further, when the measurement configuration information comprises the height configuration information, the processing unit is specifically configured to: determine a height of the communications apparatus, determine a first reporting trigger time hysteresis value according to the height, and determine that duration in which a measurement result of a first neighboring cell meets the first condition reaches the first reporting trigger time hysteresis value; and the sending unit is specifically configured to report the measurement report to the network device, wherein the measurement report comprises the measurement result of the first neighboring cell; wherein the height configuration information comprises height information, a second reporting trigger time hysteresis value, and an adjustment factor corresponding to the height information, the height information comprises a plurality of height ranges, and at least one of the plurality of height ranges corresponds to the adjustment factor; and wherein the communications apparatus is specifically configured to: determine that the height is within a first height range in the plurality of height ranges, wherein the first height range corresponds to the adjustment factor, and determining the first reporting trigger time hysteresis value according to the adjustment factor and the second reporting trigger time hysteresis value; or determine that the height is within a second height range in the plurality of height ranges, wherein the second height range corresponds to the second reporting trigger time hysteresis value, and the first reporting trigger time hysteresis value is equal to the second reporting trigger time hysteresis value.

With reference to the third aspect, in another possible implementation, the measurement configuration information includes a first period. The processing unit is further configured to determine the first period. The sending unit is further configured to report the measurement report to the network device. The measurement report further includes cell information reported by using at least one trigger measurement event, or includes the cell information reported by using the at least one trigger measurement event and corresponding trigger duration. The trigger duration is continuous duration in which a neighboring cell measurement result obtained by the terminal through measurement already meets the first condition. Therefore, the terminal periodically reports measurement event information of a neighboring cell. This indirectly reduces an amount of signaling used by the terminal to report measurement results of a plurality of neighboring cells, and effectively reduces a waste of signaling resources.

Other examples out of the scope of the invention are also mentioned below (as fourth to ninth examples) for illustrative purposes.

A fourth example provides a communications apparatus, including: a processing unit, configured to determine measurement configuration information, where the measurement configuration information is used by a terminal to report a neighboring cell measurement result, and the measurement configuration information includes at least one of timer configuration information, height configuration information, and speed configuration information; a sending unit, configured to send the measurement configuration information to the terminal; and a receiving unit, configured to receive a measurement report reported by the terminal, where the measurement report includes a measurement result of at least one neighboring cell, the measurement result of the at least one neighboring cell meets a first condition, and the first condition is a measurement event entering condition or a measurement event leaving condition.

It should be noted that the function modules in the third aspect and the fourth example may be implemented by hardware, or may be implemented by executing corresponding software by hardware. The hardware or software includes one or more modules corresponding to the foregoing functions. For example, a transceiver is configured to complete functions of the receiving unit and the sending unit, a processor is configured to complete functions of the processing unit, and a memory is configured to process program instructions of the measurement reporting methods in the embodiments and examples of this application. The processor, the transceiver, and the memory are connected and communicate with each other by using a bus. For details, refer to functions of actions of the terminal in the measurement reporting method provided in the first example and functions of actions of the network device in the measurement reporting method provided in the second aspect.

A fifth example provides a communications apparatus, including a processor, a memory, a bus, and a communications interface. The memory is configured to store a computer executable instruction. The processor and the memory are connected by using the bus. When the processor runs, the processor executes the computer executable instruction stored in the memory, so that the communications apparatus performs the method according to any one of the foregoing aspects and examples.

A sixth example provides a computer readable storage medium, configured to store a computer software instruction used by the foregoing communications apparatus. When the computer software instruction is executed by a processor, the communications apparatus is enabled to perform the method according to any of the foregoing aspects and examples.

A seventh example provides a computer readable storage medium, configured to store a computer software instruction used by the foregoing network device. When the computer software instruction is run on the network device, the network device is enabled to perform the method according to any of the foregoing aspects and examples.

An eighth example provides a computer program product including an instruction. When the computer program product is run on a computer, the computer is enabled to perform the method according to any one of the foregoing examples.

A ninth example provides a system, including the terminal according to the third aspect or the fifth example and the network device according to the fourth example or the sixth example.

In addition, for technical effects brought by any design manner in the third to the ninth examples, refer to technical effects brought by different design manners in the first example and the second aspect. Details are not described herein.

These aspects and examples or other aspects in the embodiments of this application are clearer and more comprehensible in descriptions of the following embodiments.

### BRIEF DESCRIPTION OF DRAWINGS

FIG. 1 is a schematic diagram of a process in which a base station performs measurement configuration on a terminal according to the prior art;
FIG. 2 is a simplified schematic diagram of a system architecture according to an embodiment of this application;
FIG. 3 is a simplified schematic diagram of an LTE system architecture according to an embodiment of this application;
FIG. 4 is a schematic diagram of a scenario in which a network device is an NR-NB according to an embodiment of this application;
FIG. 5 is a schematic diagram of a scenario in which a network device is CU-DU separation according to an embodiment of this application;
FIG. 6 is a schematic diagram of composition of a network device according to an embodiment of this application;
FIG. 7 is a schematic diagram of composition of a terminal according to an embodiment of this application;
FIG. 8 is a flowchart of a measurement reporting method according to an embodiment of this application;
FIG. 9 is a schematic diagram of reporting a measurement report according to an embodiment of this application;
FIG. 10 is a schematic diagram in which a mobile state of a terminal corresponds to a beam change according to an embodiment of this application;
FIG. 11 is another schematic diagram of reporting a measurement report according to an embodiment of this application;
FIG. 12 is a flowchart of another measurement reporting method according to an embodiment of this application;
FIG. 13 is a schematic diagram of composition of a communications apparatus according to an embodiment of this application;
FIG. 14 is a schematic diagram of composition of another communications apparatus according to an embodiment of this application;
FIG. 15 is a schematic diagram of composition of still another communications apparatus according to an embodiment of this application; and
FIG. 16 is a schematic diagram of composition of yet another communications apparatus according to an embodiment of this application.

### DESCRIPTION OF EMBODIMENTS

Currently, it is stipulated in a communication protocol of a wireless communications technology that, after a terminal establishes a communication connection to a base station and enters a connected mode, the base station needs to perform measurement configuration on the terminal, so that the terminal measures a neighboring cell according to the measurement configuration to obtain a measurement result of the neighboring cell, and provides reference for wireless network resource configuration. For example, when the measurement result of the neighboring cell is better than that of a serving cell of the terminal, the terminal may be handed over to the neighboring cell, so that the neighboring cell provides a communications service for the terminal. The wireless communications technology may be a second generation mobile telecommunications (the second Generation Telecommunication, 2G) technology, a third generation mobile telecommunications (the third Generation Telecommunication, 3G) technology, or a fourth generation mobile telecommunications (the fourth Generation Telecommunication, 4G) technology.

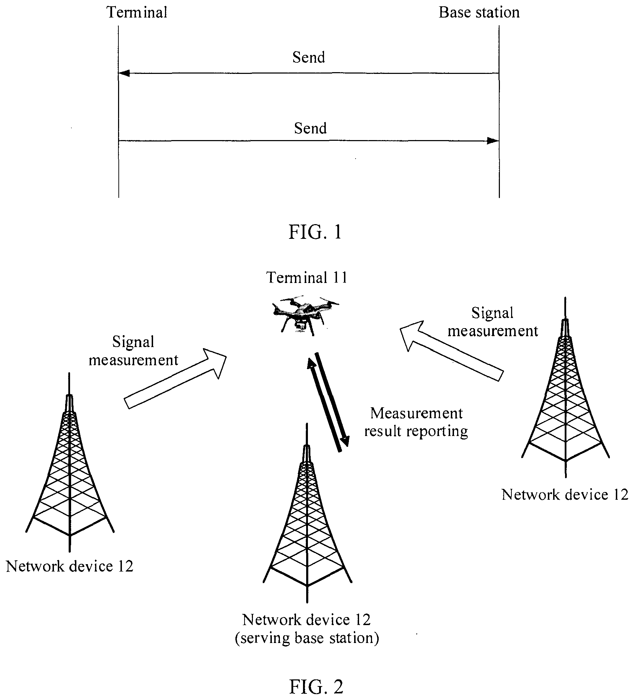

FIG. 1 shows a process in which a base station performs measurement configuration on a terminal. The base station first notifies the terminal of measurement configuration information by using a measurement configuration (measConfig) information element carried in a radio resource control connection reconfiguration (Radio Resource Control Connection Reconfiguration, RRC Connection Reconfiguration) message. The terminal may maintain a measurement configuration database (VarMeasConfig), and store, in the measurement configuration database, the measurement configuration information received by the terminal. The measurement configuration information includes a measurement identification (measId), a measurement object identifier (measObjectId), a report configuration identifier (reportConfigId), and specific configuration information content. The configuration information content includes measurement object (measObject) information and report configuration (reportConfig) information. The measurement identification is an index of a measurement configuration entry in the measurement configuration database. One measurement identification corresponds to one measurement object and one report configuration. Alternatively, a plurality of measurement identifications may correspond to a plurality of measurement objects and one report configuration. In other words, each of the plurality of measurement identifications corresponds to different measurement objects but corresponds to a same report configuration. Alternatively, a plurality of measurement identifications may correspond to one measurement object and a plurality of report configurations. In other words, the plurality of measurement identifications correspond to a same measurement object but correspond to different report configurations. The measurement object identifier corresponds to one measurement object configuration item, and the measurement object configuration item may include a measurement frequency that needs to be measured, a measurement bandwidth, a frequency-dependent offset, a cell list, a cell blacklist, and the like. The report configuration identifier corresponds to one measurement report configuration item, and the measurement report configuration item may include an event that needs to be measured, a related event parameter, a period of periodic reporting, and/or the like. Then, after completing configuration according to the measurement configuration information, the terminal sends a radio resource control connection reconfiguration complete (Radio Resource Control Connection Reconfiguration Complete, RRC Connection Reconfiguration Complete) message to the base station, to notify the base station that the terminal completes the configuration according to the measurement configuration information. When a radio environment changes, the base station further sends new measurement configuration information to the terminal, to notify the terminal of the new measurement configuration information.

It should be noted that a height of the terminal is usually lower than a height of the base station currently. Due to building blocking or the like, a quantity of neighboring cells that can be measured by the terminal is relatively small and is usually less than 8. However, with continuous development of communications technologies, the height of the terminal may be higher than the height of the base station. For example, if a cellular communications network can support a drone, data of the drone can be transmitted in a long distance beyond the horizon, and this helps the drone fly far. In addition, information such as a photo or a video captured by the drone can also be returned at a high speed in real time. Therefore, this greatly facilitates development of the drone industry. In this way, if a flight height of the drone is higher than the height of the base station and decreases due to building blocking or the like, the drone can "see" up to dozens of surrounding base stations, and the drone can obtain measurement results of a plurality of neighboring cells through measurement. Therefore, in an existing measurement reporting mechanism, for event trigger reporting, a large quantity of neighboring cells may cause frequent reporting and a problem that a neighboring cell measurement result that needs to be reported may not be added to a to-be-reported measurement report.

To resolve a waste of signaling resources that is caused by reporting measurement results of a plurality of neighboring cells by the terminal when the terminal learns, through measurement, that the measurement results of the plurality of neighboring cells meet a measurement event reporting condition, an embodiment of this application provides a measurement reporting method, and a basic principle of the method is as follows: A network device first sends measurement configuration information to the terminal. After receiving the measurement configuration information sent by the network device, the terminal measures a neighboring cell, and reports a measurement report to the network device according to the measurement configuration information. The network device receives the measurement report reported by the terminal. The measurement configuration information includes at least one of timer configuration information, height configuration information, and speed configuration information. Optionally, the foregoing information is included in a report configuration. The measurement report includes a measurement result of at least one neighboring cell. The measurement result of the at least one neighboring cell meets a first condition. The first condition is a measurement event entering condition or a measurement event leaving condition; or the first condition is further constrained as follows: The measurement result that is of the at least one neighboring cell and that is obtained after layer 3 filtering continuously meets the measurement event entering condition or the measurement event leaving condition within a hysteresis time range. In the embodiments of this application, the foregoing two cases are collectively referred to as the following: A measurement result meets the first condition. According to the measurement reporting method in this embodiment of this application, when the terminal learns, through measurement, that measurement results of a plurality of neighboring cells meet the first condition, and needs to report one measurement report to the network device for a measurement result of each neighboring cell, the terminal may adjust, according to any combination of the timer configuration information, the height configuration information, and the speed configuration information, a quantity of times for which the terminal reports the measurement report to the network device. Therefore, this effectively reduces signaling resources required by the terminal to frequently report the measurement results of the plurality of neighboring cells.

The following describes the implementations of the embodiments of this application in detail with reference to accompanying drawings.

FIG. 2 is a simplified schematic diagram of a system architecture applicable to an embodiment of this application. As shown in FIG. 2, the system architecture may include a terminal 11 and a network device 12. The terminal communicates with the network device by using a wireless communications technology.

The terminal 11 may be a wireless terminal. The wireless terminal may be a device that provides a user with voice and/or data connectivity, a handheld device having a wireless connection function, or another processing device connected to a wireless modem. The wireless terminal may communicate with one or more core networks or the Internet through a radio access network (for example, Radio Access Network, RAN). The wireless terminal may be a mobile terminal, for example, a mobile phone (or referred to as a "cellular" phone), a computer, and a data card. For example, the wireless terminal may be a portable, pocket-sized, handheld, or computer built-in mobile apparatus, or an in-vehicle mobile apparatus, which exchanges languages and/or data with the radio access network. For example, the wireless terminal may be a device such as a personal communications service (Personal Communication Service, PCS) phone, a cordless telephone set, a session initiation protocol (SIP) phone, a wireless local loop (WLL, Wireless Local Loop) station, or a personal digital assistant (Personal Digital Assistant, PDA). The wireless terminal may alternatively be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a subscriber station (Subscriber Station, SS), customer-premises equipment (Customer Premises Equipment, CPE), user equipment (User Equipment, UE), or the like. In an embodiment, the terminal shown in FIG. 2 may be a drone.

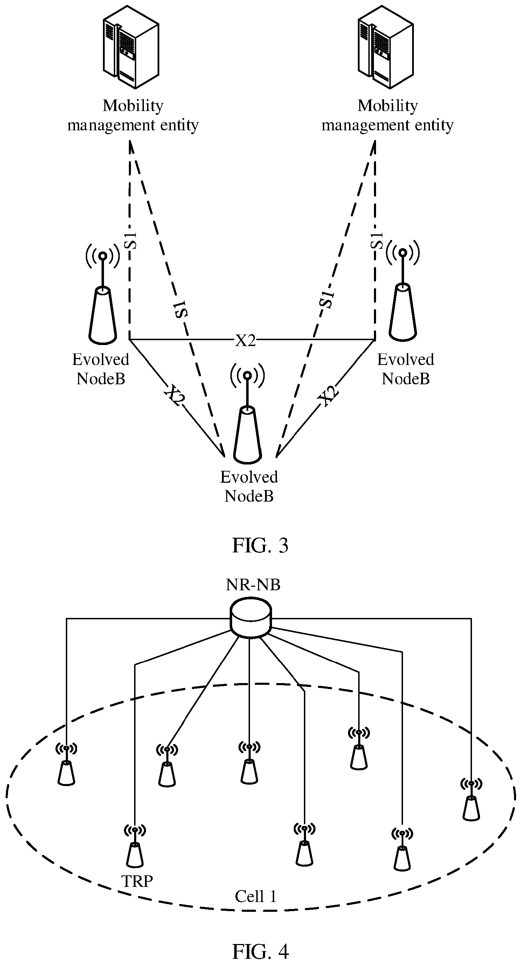

The network device 12 may be a base station (Base Station, BS), a base station controller, or the like in wireless communication, or may be referred to as a radio access point, a transceiver station, a relay station, a cell, a transmission reception point (Transmit and Receive Port, TRP), or the like. Specifically, the network device 12 is an apparatus that is deployed in the radio access network and that is configured to provide a wireless communication function for the terminal 11. The network device 12 has one or more of the following main functions: managing a radio resource, compressing an Internet Protocol (Internet Protocol, IP) header, encrypting a user data stream, selecting a mobility management entity (Mobility Management Entity, MME) when the user equipment is attached, routing user plane data to a serving gateway (Service Gateway, SGW), organizing and sending a paging message, organizing and sending a broadcast message, performing measurement for the purpose of mobility or scheduling, configuring a measurement report, and the like. The network device 12 may include various forms of cellular base stations, home eNodeBs, cells, wireless transmission points, macro base stations, micro base stations, relay stations, radio access points, and the like. A name of a device having a network device function may vary with a radio access technology used in a system. For example, the device is referred to as a NodeB (Node B) in a third generation mobile telecommunications technology (the third Generation Telecommunication, 3G) system, or is referred to as an evolved NodeB (evolved NodeB, eNB or eNodeB) in a long term evolution (Long Term Evolution, LTE) system. FIG. 3 is a schematic diagram of an LTE system architecture. The device having a network device function is referred to as a gNB or the like in a fifth generation mobile telecommunications technology (the fifth Generation Telecommunication, 5G) system, or is referred to as an access point (Access Point) in a wireless local access system.

It should be noted that, for the 5G system or a new radio access network (New Radio Access Network, NR) system, there may be one or more transmission reception points (Transmission Reception Point, TRP) in one NR base station (NR-NB or gNB), and all the TRPs belong to a same cell. FIG. 4 is a schematic diagram of a scenario in which a network device is an NR-NB according to an embodiment of this application. Each TRP and the terminal may use the measurement reporting method described in the embodiments of this application.

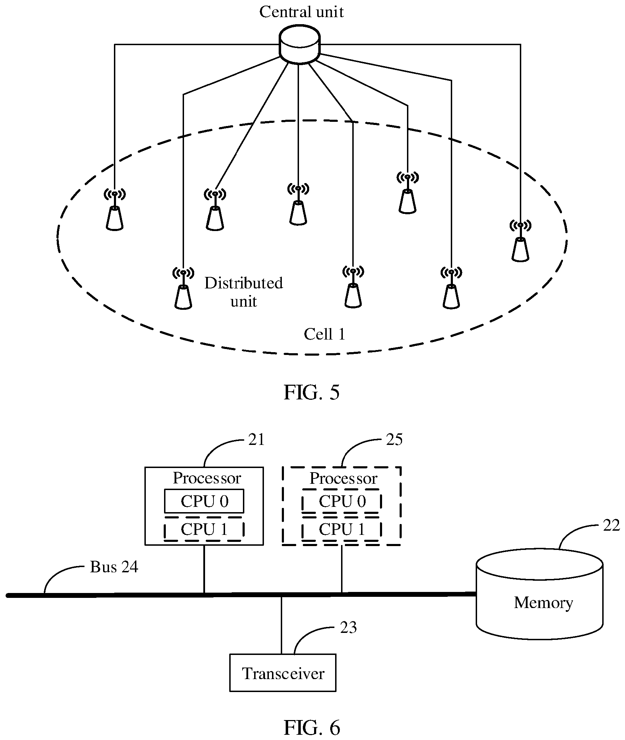

In another scenario, the network device 12 may alternatively be divided into a central unit (Central Unit, CU) and a distributed unit (Distribute Unit, DU). There may be one CU and a plurality of DUs. FIG. 5 is a schematic diagram of a scenario in which a network device is CU-DU separation according to an embodiment of this application. Each DU and the terminal may use the measurement reporting method described in the embodiments of this application. A difference between the CU-DU separation scenario and a scenario of a plurality of TRPs lies in that the TRP is merely a radio frequency unit or an antenna device, but the DU can implement a protocol stack function. For example, the DU can implement a physical layer function.

As communications technologies evolve, a name of the network device may change. In addition, in another possible case, the network device 12 may be another apparatus that provides a wireless communication function for the terminal 11. For ease of description, an apparatus that provides a wireless communication function for the terminal 11 is referred to as the network device 12 in this embodiment of this application.

FIG. 6 is a schematic diagram of composition of a network device according to an embodiment of this application. The network device 12 in FIG. 2 may be implemented as the network device in FIG. 6. As shown in FIG. 6, the network device may include at least one processor 21, a memory 22, a transceiver 23, and a bus 24.

The following describes the components of the network device in detail with reference to FIG. 6.

The processor 21 is a control center of the network device, and may be one processor or may be a collective name of a plurality of processing elements. For example, the processor 21 may be a central processing unit (Central Processing Unit, CPU) or an application-specific integrated circuit (Application Specific Integrated Circuit, ASIC), or may be one or more integrated circuits configured to implement this embodiment of this application, for example, one or more microprocessors (Digital Signal Processor, DSP) or one or more field programmable gate arrays (Field Programmable Gate Array, FPGA).

The processor 21 may run or execute a software program stored in the memory 22, and invoke data stored in the memory 22, to perform various functions of the network device.

During specific implementation, in an embodiment, the processor 21 may include one or more CPUs, for example, a CPU 0 and a CPU 1 shown in FIG. 6.

During specific implementation, in an embodiment, the network device may include a plurality of processors, for example, the processor 21 and a processor 25 shown in FIG. 6. Each of these processors may be a single-core processor (single-CPU), or may be a multi-core processor (multi-CPU). The processor herein may be one or more devices, circuits, and/or processing cores configured to process data (for example, a computer program instruction).

The memory 22 may be a read-only memory (Read-only Memory, ROM) or another type of static storage device capable of storing static information and instructions, a random access memory (Random Access Memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disk, a Blue-ray optical disc, and the like), a magnetic disk storage medium or another magnetic storage device, or any other medium capable of carrying or storing expected program code in a form of an instruction or a data structure and capable of being accessed by a computer. However, the memory 22 is not limited thereto. The memory 22 may exist independently, and is connected to the processor 21 by using the bus 24. Alternatively, the memory 22 may be integrated with the processor 21.

The memory 22 is configured to store a software program for executing the solutions in the present invention, and the processor 21 controls the execution.

The transceiver 23 is configured to communicate with another device or a communications network. For example, the transceiver 23 is configured to communicate with the communications network such as the Ethernet, a radio access network (radio access network, RAN), or a wireless local area network (Wireless Local Area Networks, WLAN). The transceiver 23 may include all or a part of a baseband processor, and optionally, may further include an RF processor. The RF processor is configured to send and receive an RF signal, and therefore the baseband processor is configured to process a baseband signal converted from the RF signal or a baseband signal to be converted into the RF signal. The transceiver 23 may include a receiving unit for implementing a receiving function and a sending unit for implementing a sending function.

The bus 24 may be an industrial standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 6, but this does not mean that there is only one bus or only one type of bus.

A device structure shown in FIG. 6 does not constitute a limitation on the network device, and may include more or fewer components than those shown in the figure, or combine some components, or have different component arrangements.

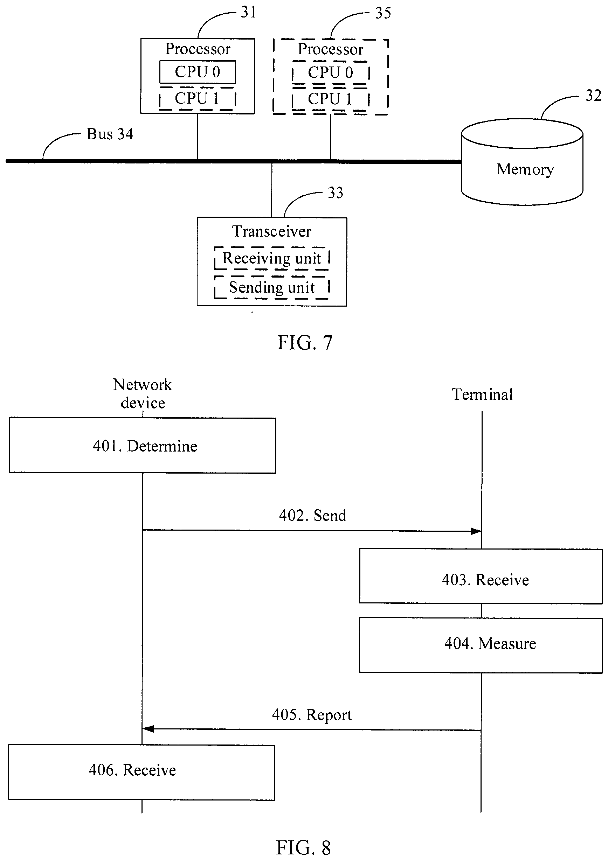

FIG. 7 is a schematic diagram of composition of a terminal according to an embodiment of this application. The terminal 11 in FIG. 2 may be implemented as the terminal in FIG. 7. As shown in FIG. 7, the terminal may include at least one processor 31, a memory 32, a transceiver 33, and a bus 34.

The following describes the components of the terminal in detail with reference to FIG. 7.

The processor 31 may be a processor, or may be a collective name of a plurality of processing elements. For example, the processor 31 may be a general-purpose CPU, an ASIC, or one or more integrated circuits configured to control program execution of the solutions in this application, for example, one or more DSPs or one or more FPGAs. The processor 31 may run or execute a software program stored in the memory 32, and invoke data stored in the memory 32, to perform various functions of the terminal.

During specific implementation, in an embodiment, the processor 31 may include one or more CPUs. For example, as shown in FIG. 7, the processor 31 includes a CPU 0 and a CPU 1.

During specific implementation, in an embodiment, the terminal may include a plurality of processors. For example, as shown in FIG. 7, the terminal includes the processor 31 and a processor 35. Each of these processors may be a single-CPU, or may be a multi-CPU. The processor herein may be one or more devices, circuits, and/or processing cores configured to process data (for example, a computer program instruction).

The memory 32 may be a ROM or another type of static storage device capable of storing static information and instructions, a RAM or another type of dynamic storage device capable of storing information and instructions, an EEPROM, a CD-ROM or another compact disc storage, an optical disc storage (including a compressed optical disc, a laser disc, an optical disc, a digital versatile disk, a Blue-ray optical disc, and the like), a magnetic disk storage medium or another magnetic storage device, or any other medium capable of carrying or storing expected program code in a form of an instruction or a data structure and capable of being accessed by a computer. However, the memory 32 is not limited thereto. The memory 32 may exist independently, and is connected to the processor 31 by using the bus 34. Alternatively, the memory 32 may be integrated with the processor 31.

The transceiver 33 is configured to communicate with another device or a communications network, such as the Ethernet, a RAN, or a WLAN. The transceiver 33 may include a receiving unit for implementing a receiving function and a sending unit for implementing a sending function.

The bus 34 may be an ISA bus, a PCI bus, an EISA bus, or the like. The bus may be classified into an address bus, a data bus, a control bus, and the like. For ease of representation, only one thick line is used to represent the bus in FIG. 7, but this does not mean that there is only one bus or only one type of bus.

A device structure shown in FIG. 7 does not constitute a limitation on the terminal, and may include more or fewer components than those shown in the figure, or combine some components, or have different component arrangements. Although not shown, the terminal may further include a battery, a camera, a Bluetooth module, a global positioning system (Global Position System, GPS) module, a display, and the like. Details are not described herein.

It should be noted that, in embodiments of this application, the terminal measures a neighboring cell according to measurement configuration information. The measurement is not merely limited to a case in which the terminal measures reference signal received power (Reference Signal Receiving Power, RSRP) of the neighboring cell, and is further applicable to all other signal evaluation manners, for example, a manner in which the terminal measures reference signal received quality (Reference Signal Received Quality, RSRQ) and a signal to interference plus noise ratio (Signal Interference Noise Ratio, SINR) of the neighboring cell. Therefore, a measurement result may be the RSRP, the RSRQ, or the SINR. Specific content of the measurement result is not limited in the embodiments of this application, and may be any signal evaluation manner. In addition, a measurement event described in the embodiments of this application may be any event specified in the 3G system, the 4G system, and the 5G system. A specific measurement event reported by the terminal to the network device is not limited in the embodiments of this application. For example, several existing measurement events may be as follows: An event A3 indicates that quality of an intra-frequency/inter-frequency neighboring cell is higher than quality of a serving cell by a specific threshold, and a source base station enables an intra-frequency/inter-frequency handover request when cell information that meets an event trigger condition is reported. An event A4 indicates that quality of an inter-frequency neighboring cell is greater than a specified threshold, and a source base station enables an inter-frequency handover request when cell information that meets an event trigger condition is reported. An event A5 indicates that quality of a serving cell is less than a specified threshold and quality of an inter-frequency neighboring cell is greater than a specified threshold, and a source base station enables an inter-frequency handover request when cell information that meets an event trigger condition is reported. An event B1 indicates that quality of an inter-system neighboring cell is greater than a specified threshold, and a source base station enables an inter-system handover request when cell information that meets an event trigger condition is reported. An event B2 indicates that quality of a serving cell is less than a specified threshold and quality of an inter-system neighboring cell is greater than a specified threshold, and a source base station enables an inter-system handover request when cell information that meets an event trigger condition is reported.

For a process in which the terminal reports all measurement events to the network device, refer to any measurement reporting method in the embodiments of this application. FIG. 8 is a flowchart of a measurement reporting method according to an embodiment of this application. As shown in FIG. 8, the method may include the following steps.

401. A network device determines measurement configuration information.

The measurement configuration information is used by a terminal to report a neighboring cell measurement result, and the measurement configuration information includes at least one of timer configuration information, height configuration information, and speed configuration information.

Optionally, the measurement configuration information is further used to instruct the terminal to measure a neighboring cell. The measurement configuration information includes a report configuration identifier used by the terminal to report the neighboring cell measurement result, and further includes a measurement object identifier used by the terminal to measure the neighboring cell, and specific configuration information content. The configuration information content includes measurement object information and report configuration information. The measurement object identifier corresponds to one measurement object configuration item. In other words, the network device configures, in the measurement object configuration item, an object that needs to be measured by the terminal. The measurement object configuration item may further include a frequency that needs to be measured, a measurement bandwidth, a frequency-dependent offset, a cell list, a cell blacklist, and the like. The terminal measures the neighboring cell according to the measurement object information in the measurement configuration information.

The timer configuration information may include timer duration. A timer start condition, a timer stop condition, and a timer timeout action may be indicated in the measurement configuration information, or may be specified in a protocol, in other words, may be preconfigured at delivery before the terminal performs measurement reporting, and do not need to be configured by the network device for the terminal by using signaling. A first threshold N may be independently indicated in the measurement configuration information, or may be indicated in the timer configuration information, or is specified in the protocol, in other words, may be preconfigured at delivery before the terminal performs measurement reporting, and does not need to be configured by the network device for the terminal by using signaling. For example, the timer start condition is as follows: When a timer is not started, for one measurement ID, the terminal starts the timer when determining that a measurement result of a neighboring cell meets a first condition. To be specific, the terminal obtains a measurement result of a first neighboring cell through measurement, and starts the timer when determining that the measurement result of the first neighboring cell meets the first condition. The measurement result of the first neighboring cell herein may be understood as that the terminal measures neighboring cells and obtains the measurement result that is of the first neighboring cell and that meets the first condition. It should be noted that, before the terminal measures the first neighboring cell, the terminal may obtain a measurement result of another neighboring cell through measurement, but the measurement result of the another neighboring cell does not meet the first condition. Therefore, the timer is not started. Alternatively, before the terminal measures the first neighboring cell, the terminal does not obtain a measurement result of any other neighboring cell through measurement. Therefore, the timer is not started. The first threshold N is used to indicate that when a quantity of neighboring cells whose measurement results obtained by the terminal through measurement meet the first condition reaches the threshold when the timer is in a running state, the terminal reports the measurement results of the neighboring cells to the network device. The timer stop condition is that the timer is stopped when a quantity of neighboring cells whose measurement results obtained by the terminal through measurement reaches the first threshold when the timer is in a running state. The timer timeout action is that the terminal initiates a process of reporting a measurement report. The measurement report includes at least one neighboring cell whose measurement result meets the first condition when the timer is in a running state.

It should be noted that the timer in this embodiment of this application is configured according to the timer configuration information, and is not another timer configured for the terminal. In addition, the timer in this embodiment of this application may be configured according to a case in which the first threshold N has been configured for the terminal. In this way, when the terminal is to report the measurement report to the network device, the terminal needs to consider both the first threshold N and the timer duration. In other words, when the timer is in a running state, the terminal reports the measurement report to the network device after a quantity of neighboring cells whose measurement results obtained by the terminal through measurement meet a reporting condition or a quantity of to-be-reported events reaches the first threshold N, or the terminal reports the measurement report to the network device after the timer expires.

The height configuration information includes height information and a reporting trigger hysteresis value corresponding to the height information, the height information includes a plurality of height ranges, and the plurality of height ranges each may correspond to one reporting trigger hysteresis value. Alternatively, the height configuration information includes height information, a second reporting trigger hysteresis value, and an adjustment factor corresponding to the height information, the height information includes a plurality of height ranges, and at least one of the plurality of height ranges each corresponds to one adjustment factor.

The speed configuration information includes speed information, a fourth reporting trigger hysteresis value, and an adjustment factor corresponding to the speed information, the speed information includes a plurality of speed ranges, and at least one of the plurality of speed ranges each corresponds to one adjustment factor.

It should be noted that the first condition is a measurement event entering condition or a measurement event leaving condition; or the first condition is constrained as follows: The measurement result that is of the at least one neighboring cell and that is obtained after layer 3 filtering continuously meets the measurement event entering condition or the measurement event leaving condition within a hysteresis time range. In the embodiments of this application, the foregoing two cases are collectively referred to as the following: A measurement result meets the first condition. The measurement event entering condition or the measurement event leaving condition may be a condition corresponding to any measurement event specified in a 3G system, a 4G system, and a 5G system. Different measurement events correspond to different conditions. For example, an event A3 indicates that quality of an intra-frequency or inter-frequency neighboring cell is higher than quality of a serving cell by a specific threshold, and a source network device starts an intra-frequency/inter-frequency handover request when cell information that meets an event trigger condition is reported. The measurement event entering condition is that quality of an intra-frequency or inter-frequency neighboring cell is higher than quality of a serving cell by a specific threshold, and the measurement event leaving condition is opposite to the measurement event entering condition. For example, a leaving condition for the event A3 is that the quality of the intra-frequency or inter-frequency neighboring cell is less than a sum of the quality of the serving cell and an offset.

Optionally, the measurement configuration information may alternatively include a first period, and the first period is used by the terminal to periodically report the measurement report to the network device according to the first period. The measurement report includes information about at least one triggered measurement event and a corresponding neighboring cell measurement result, and the measurement event information may be a measurement ID or a measurement event ID. Alternatively, the measurement report includes information about at least one triggered measurement event, and trigger duration and a neighboring cell measurement result that correspond to the at least one triggered measurement event.

402. The network device sends the measurement configuration information to the terminal.

403. The terminal receives the measurement configuration information sent by the network device.

After the network device sends the measurement configuration information to the terminal, the terminal receives the measurement configuration information sent by the network device.

404. The terminal measures the neighboring cell.

After the terminal receives the measurement configuration information sent by the network device, the terminal measures the neighboring cell according to the measurement configuration information. It should be noted that the measurement configuration information includes the report configuration identifier used by the terminal to report the neighboring cell measurement result, and further includes the measurement object identifier used by the terminal to measure the neighboring cell, and the specific configuration information content. The configuration information content includes the measurement object information and the report configuration information. The measurement object identifier corresponds to one measurement object configuration item. In other words, the network device configures, in the measurement object configuration item, the object that needs to be measured by the terminal. The measurement object configuration item may include the frequency that needs to be measured, the measurement bandwidth, the frequency-dependent offset, the cell list, the cell blacklist, and the like.

405. The terminal reports the measurement report to the network device according to the measurement configuration information.

The terminal measures the neighboring cell according to the measurement configuration information, and sends the measurement report to the network device after obtaining a measurement result. The measurement report includes the measurement result of the at least one neighboring cell. For event reporting, the measurement result of the at least one neighboring cell meets the first condition. The first condition is the measurement event entering condition or the measurement event leaving condition; or the first condition is constrained as follows: The measurement result that is of the at least one neighboring cell and that is obtained after layer 3 filtering continuously meets the measurement event entering condition or the measurement event leaving condition within the hysteresis time range.

A manner in which the terminal reports the measurement report to the network device varies with configuration information included in the measurement configuration information. The following separately describes different measurement reporting manners in detail.

Manner 1: If the measurement configuration information configured by the network device for the terminal in step 401 includes the timer configuration information, step 404 may be specifically as follows: When the timer is not started, the terminal starts the timer when determining that a measurement result of a neighboring cell meets the first condition. Then, the terminal continues to measure another neighboring cell to obtain a measurement result of the another neighboring cell, and determines whether the measurement result of the another neighboring cell meets the first condition. If a quantity of neighboring cells whose measurement results meet the first condition reaches the first threshold N when the timer is in a running state, the terminal reports the measurement report to the network device. The measurement report includes the measurement results of the N neighboring cells, and N is a positive integer. For example, in actual application, N may be set to any value from 1 to 8. In this case, running of the timer may be stopped. Therefore, the terminal reports the measurement results of the N neighboring cells to the network device only after obtaining the measurement results of the N neighboring cells within a running time period of the timer. In this case, the terminal reports the measurement results of the N neighboring cells to the network device by using only one piece of signaling. Compared with a prior-art method for reporting the measurement results of the N neighboring cells to the network device by using N pieces of signaling, the measurement reporting method in this embodiment of this application reduces a quantity of pieces of signaling required by the terminal to report measurement results of a plurality of neighboring cells, to effectively reduce a waste of signaling resources.

However, if the quantity of neighboring cells whose measurement results meet the first condition does not reach the first threshold N when the timer is in a running state, but the terminal determines that the timer has expired, the terminal reports the measurement report to the network device. The measurement report includes at least one neighboring cell whose measurement result meets the first condition when the timer is in a running state, and "at least one" may be a quantity that just reaches the first threshold N, or may be a quantity that is less than the first threshold N. Therefore, after the timer expires, regardless of a quantity of neighboring cells whose measurement results are obtained by the terminal, the terminal reports all obtained measurement results of neighboring cells to the network device. This avoids a reporting delay caused by waiting for a long time by the terminal to obtain the measurement results of the N neighboring cells.

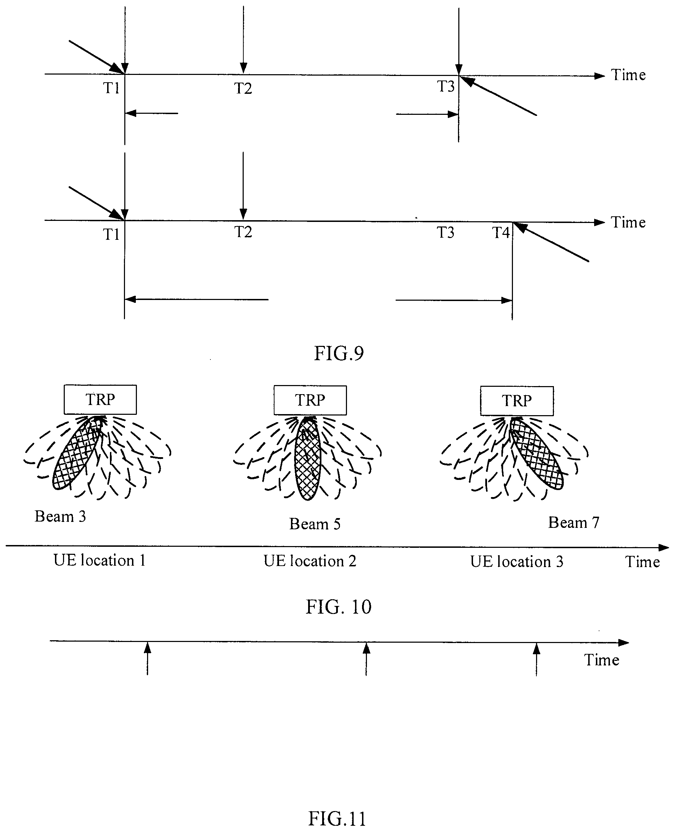

For example, FIG. 9 is a schematic diagram of reporting a measurement report. It is assumed that N is 3. As shown in FIG. 9, the terminal first determines that a measurement result of a cell 1 meets the first condition at T1, and starts the timer. Then, when the timer is in a running state, the terminal further determines that a measurement result of a cell 2 meets the first condition at T2, and determines that a measurement result of a cell 3 meets the first condition at T3. After the terminal determines that the measurement result of the cell 3 meets the first condition, the terminal determines that there are three neighboring cells whose measurement results meet the first condition. In this case, the terminal reports a measurement report to the network device and stops running of the timer, and the measurement report includes the measurement result of the cell 1, the measurement result of the cell 2, and the measurement result of the cell 3. When the timer is in a running state, it is assumed that the terminal determines that only the measurement result of the cell 1 meets the first condition at T1 and the measurement result of the cell 2 meets the first condition at T2, and when the timer expires at T4, a quantity of neighboring cells whose measurement results meet the first condition is 2 and does not reach 3. In this case, when the terminal determines that the timer has expired, the terminal reports the measurement report to the network device. The measurement report includes the measurement result of the cell 1 and the measurement result of the cell 2.

It should be noted that a neighboring cell measurement result finally obtained by the terminal may be obtained after layer 3 (L3) filtering. To be specific, smooth filtering is performed on a current value of the measurement result of the neighboring cell by using a historical value of the measurement result of the neighboring cell, and this may be further constrained as follows: The neighboring cell measurement result obtained after layer 3 filtering continuously meets the measurement event entering condition or the measurement event leaving condition within the hysteresis time range.

It should be noted that the measurement configuration information includes a measurement identification, a measurement object identifier, a report configuration identifier, and specific configuration information content, and the configuration information content includes measurement object information and report configuration information. Therefore, the timer configuration information may be configured for the measurement identification in the measurement configuration information. The measurement identification is an index of a measurement configuration entry in a measurement configuration database. One measurement identification corresponds to one measurement object and one report configuration. The measurement object identifier corresponds to one measurement object configuration item. The measurement object configuration item may include a measurement frequency that needs to be measured, a measurement bandwidth, a frequency-dependent offset, a cell list, a cell blacklist, and the like. The report configuration identifier corresponds to one measurement report configuration item, and the measurement report configuration item may include an event that needs to be measured, a related event parameter, a period of periodic reporting, and/or the like. For example, one piece of timer configuration information may correspond to a combination of one measurement frequency and one measurement event, and the measurement frequency may be understood as a measurement frequency channel number. Alternatively, the timer configuration information may be configured for the measurement object identifier in the measurement configuration information. A plurality of measurement identifications may correspond to one measurement object and a plurality of report configurations. In other words, all of the plurality of measurement identifications correspond to a same measurement object but correspond to different report configurations. For example, one piece of timer configuration information may correspond to one frequency, and a plurality of measurement identifications may all correspond to the frequency, but correspond to different events. Alternatively, the timer configuration information may be configured for the report configuration identifier in the measurement configuration information. A plurality of measurement identifications may correspond to a plurality of measurement objects and one report configuration. In other words, all of the plurality of measurement identifications correspond to different measurement objects but correspond to a same report configuration. For example, one piece of timer configuration information may correspond to one event, and a plurality of measurement identifications may all correspond to a report configuration of the event, but correspond to different frequencies. Alternatively, the timer configuration information may be configured for the terminal. In other words, the terminal reports all measurement events by using one timer.

In addition, the reported first threshold N may be a threshold configured for a neighboring cell quantity corresponding to one measurement identification, or may be a threshold configured for one measurement object identifier, one report configuration identifier, a quantity of events triggered to be reported by the terminal, or one measurement identification. A value of N may be indicated in the measurement configuration message, or may be specified in a protocol. For example, a threshold of a quantity of cells in which reporting is triggered is set to 3 in a measurement object. If the cell 1 meets a condition for reporting the event A3, a quantity of cells in which reporting is triggered is not reached, and the timer does not run, the timer is triggered to run. Subsequently, the cell 2 meets an event A4, the cell 3 meets an event A5, and a requirement of a threshold of a quantity of cells or a threshold of a quantity of to-be-reported events is met. In this case, the terminal reports, to the network device, that the cell 1 meets the event A3, the cell 2 meets the event A4, and the cell 3 meets the event A5. If the timer expires, the cell 1 meets the condition for reporting the event A3, the cell 2 meets the event A4, and the terminal does not obtain a new to-be-reported event through measurement, for example, if the cell 3 does not meet a measurement result of the event A5, the terminal also reports the measurement report to the network device, and the reported measurement report includes that the cell 1 meets the event A3 and the cell 2 meets the event A4. In other words, the measurement report includes two corresponding measurement identifications.

In the prior art, a reporting trigger hysteresis value (time to trigger) included in the measurement configuration information is configured for a measurement event, and different measurement events have different reporting trigger hysteresis values. The reporting trigger hysteresis value is used to ensure measurement result stability. In other words, only when duration in which a neighboring cell measurement result continuously meets the measurement event entering condition or the measurement event leaving condition is greater than the reporting trigger hysteresis value, the terminal reports the neighboring cell measurement result to the network device. An excessively small reporting trigger hysteresis value causes frequent reporting or ping-pong handover, and an excessively large reporting trigger hysteresis value causes a reporting delay. A terminal at a high altitude can measure a plurality of neighboring cells, and fluctuation of a neighboring cell measurement result is higher than that of a neighboring cell measurement result obtained by a terminal on the ground. Continuing to use an original reporting trigger hysteresis value may cause frequent reporting and ping-pong handover. Therefore, a height-related reporting trigger hysteresis value may be configured for the terminal. In other words, different reporting trigger hysteresis values are used when the terminal is at different heights.

Manner 2: If the measurement configuration information configured by the network device for the terminal in step 401 includes the height configuration information, after the terminal measures the neighboring cell in step 404, if the terminal determines that the measurement result of the first neighboring cell meets the first condition, the terminal first needs to determine a height of the terminal and determine a first reporting trigger hysteresis value according to the height, and then the terminal reports the measurement report to the network device when determining that duration in which the measurement result of the first neighboring cell meets the first condition reaches the first reporting trigger hysteresis value. The measurement report includes the measurement result of the first neighboring cell, and the first neighboring cell is a neighboring cell that currently needs to be reported.

Therefore, the terminal determines the first reporting trigger hysteresis value by using a current height of the terminal, and reports the measurement result of the first neighboring cell to the network device only when determining that the duration in which the measurement result of the first neighboring cell that is obtained through measurement meets the first condition reaches the first reporting trigger hysteresis value. Because different hysteresis values are used for different heights, a larger hysteresis value may be set when the terminal is at a relatively high height. In this case, the terminal delays a moment of reporting the measurement result of the first neighboring cell. Compared with a prior-art method in which only one hysteresis value is used for different heights, in the measurement reporting method in this embodiment of this application, a moment at which the terminal reports a neighboring cell measurement result is delayed by setting different hysteresis values for different heights of the terminal, an amount of signaling used by the terminal to report measurement results of a plurality of neighboring cells is indirectly reduced, and a waste of signaling resources is effectively reduced.

The following describes a specific implementation in which the terminal determines the first reporting trigger hysteresis value according to the height.

Optionally, if the height configuration information includes height information and a reporting trigger hysteresis value corresponding to the height information, the height information includes a plurality of height ranges, and the plurality of height ranges each correspond to one reporting trigger hysteresis value, after the terminal determines the height of the terminal, the terminal compares the height of the terminal with the plurality of height ranges, and determines that the height of the terminal is within a first height range, and the first height range corresponds to the first reporting trigger hysteresis value. In this case, the terminal reports the measurement report to the network device if the terminal determines that the duration in which the measurement result of the first neighboring cell meets the first condition reaches the first reporting trigger hysteresis value. For example, it is assumed that the first height range is [0, 100m], the corresponding first reporting trigger hysteresis value is 80 ms, a second height range is (100, 200m], and a corresponding second reporting trigger hysteresis value is 160 ms. When the terminal is at a height of 90m, a corresponding height range is the first height range, and the first height range corresponds to the first reporting trigger hysteresis value. In this case, a reporting trigger hysteresis value obtained by the terminal is the first reporting trigger hysteresis value.

Therefore, the terminal may determine the first height range in the plurality of height ranges according to the current height of the terminal, and further use the first reporting trigger hysteresis value corresponding to the first height range as a delay required when the terminal delays reporting the measurement result of the first neighboring cell. In this case, reporting is triggered only when the duration in which the measurement result of the first neighboring cell continuously meets the first condition reaches the first reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced.

Optionally, if the height configuration information includes height information, a second reporting trigger hysteresis value (which is used as a reference reporting trigger hysteresis value), and an adjustment factor corresponding to the height information, the height information includes a plurality of height ranges, and at least one of the plurality of height ranges each corresponds to one adjustment factor, after the terminal determines the height of the terminal, the terminal compares the height of the terminal with the plurality of height ranges, and determines that the height of the terminal is within the first height range, and the first height range further corresponds to a first adjustment factor. Then, the terminal adjusts the second reporting trigger hysteresis value by using the first adjustment factor, to obtain the first reporting trigger hysteresis value. In this case, the terminal reports the measurement report to the network device if the terminal determines that the duration in which the measurement result of the first neighboring cell meets the first condition reaches the first reporting trigger hysteresis value. For example, it is assumed that the second reporting trigger hysteresis value is 80 ms. If the first height range is [0, 100m], the first adjustment factor corresponding to the first height range is 1.2, and the height of the terminal is within the first height range, that is, 80 x 1.2, the obtained first reporting trigger hysteresis value is 96 ms. If a second height range is (100, 200m], a second adjustment factor corresponding to the second height range is 1.25, and the height of the terminal is within the second height range, that is, 80 x 1.25, the obtained first reporting trigger hysteresis value is 100 ms. If a third height range is (200, 300m], a third adjustment factor corresponding to the third height range is 1.5, and the height of the terminal is within the third height range, that is, 80 x 1.5, the obtained first reporting trigger hysteresis value is 120 ms.

Therefore, the terminal may determine the first height range in the plurality of height ranges according to the current height of the terminal, further adjust the second reporting trigger hysteresis value by using the first adjustment factor corresponding to the first height range, to obtain the first reporting trigger hysteresis value, and use the first reporting trigger hysteresis value as a delay required when the terminal delays reporting the measurement result of the first neighboring cell. In this case, reporting is triggered only when the duration in which the measurement result of the first neighboring cell continuously meets the first condition reaches the first reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced.

It should be noted that, if the terminal determines that the height of the terminal is within the second height range, and the second height range corresponds to the second reporting trigger hysteresis value, the terminal does not need to adjust the second reporting trigger hysteresis value, and directly determines the second reporting trigger hysteresis value as the first reporting trigger hysteresis value.

Therefore, the terminal directly uses the second reporting trigger hysteresis value as the delay required when the terminal delays reporting the measurement result of the first neighboring cell. In this case, reporting is triggered only when the duration in which the measurement result of the first neighboring cell continuously meets the first condition reaches the second reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced.

Optionally, the network device may further directly configure, for the terminal, a height range determined according to a height of the network device, and configure two reporting trigger hysteresis values for the terminal. One reporting trigger hysteresis value is accordingly used when the height of the terminal is less than or equal to the height of the network device, and the other reporting trigger hysteresis value is accordingly used when the height of the terminal is greater than the height of the network device.

In addition, the network device may further configure a cell list for the terminal. In other words, the measurement configuration information further includes the cell list. After receiving the measurement configuration information, the terminal measures the neighboring cell. Only when a measurement result that is of a cell in the cell list and that is obtained by the terminal through measurement meets the first condition, the terminal reports the measurement result of the cell in the cell list to the network device by using the foregoing reporting trigger hysteresis value related to the height configuration information. A cell identifier in the cell list may be a physical cell ID, or may be a cell index number corresponding to the physical cell ID.

In the prior art, the terminal may count a quantity of cell changes within a period of time, and compare the quantity of cell changes with a corresponding threshold to determine whether a moving state of the terminal is a medium-speed moving state or a high-speed moving state. However, in the NR-NB scenario shown in FIG. 4 and the CU-DU separation scenario shown in FIG. 5, a single DU may generate a plurality of cell signals, or a plurality of DUs may generate a single cell signal. Consequently, a cell range becomes larger. A cell change may not occur even if the terminal is in a high-speed moving state. Consequently, this speed estimation method is no longer applicable. In addition, for the 5G system, the network device may perform wireless communication with the terminal by using a beam. In this embodiment of this application, the moving state of the terminal may be estimated by using a quantity of beam changes. Therefore, a speed-related reporting trigger hysteresis value may be configured for the terminal. In other words, different reporting trigger hysteresis values are used when the terminal is at different moving speeds.

Manner 3: If the measurement configuration information configured by the network device for the terminal in step 401 includes the speed configuration information or moving state parameter information, after the terminal measures the neighboring cell in step 404, if the terminal determines that the measurement result of the first neighboring cell meets the first condition, the terminal first needs to determine a moving speed of the terminal according to a beam change status, and determine a third reporting trigger hysteresis value according to the moving speed. Then, the terminal reports the measurement report to the network device when determining that duration in which the measurement result of the first neighboring cell meets the first condition reaches the third reporting trigger hysteresis value. The measurement report includes the measurement result of the first neighboring cell, and the first neighboring cell is a neighboring cell that currently needs to be reported. The terminal determines the moving speed of the terminal according to a quantity of beam changes within a specific time period. For example, the network device may configure a related moving state determining parameter for the terminal, and the related moving state determining parameter includes a statistical time and beam change quantity thresholds respectively corresponding to different moving state levels. For example, the statistical time is 30 seconds, a beam change quantity threshold in a medium-speed moving state is 30, and a beam change quantity threshold in a high-speed moving state is 60. In other words, within 30 seconds, if a quantity of beam changes is less than 30, it is determined that the terminal is in a low-speed moving state; if the quantity of beam changes is greater than or equal to 30 and less than 60, it is determined that the terminal is in a medium-speed moving state; or if the quantity of beam changes is greater than 60, it is determined that the terminal is in a high-speed moving state. FIG. 10 is a schematic diagram in which a moving state of a terminal corresponds to a beam change. When the terminal moves from a location 1 to a location 2, a beam 3 used by the terminal accordingly changes to a beam 5. When the terminal further moves from the location 2 to a location 3, the beam 5 used by the terminal accordingly changes to a beam 7. The beam herein may be a serving beam used for communication between the terminal and the network device, or may be a beam with best signal quality detected by the terminal. The terminal may distinguish between beams by using a beam ID, a reference signal resource corresponding to a beam, or a corresponding reference signal ID.

Therefore, the terminal determines a current moving speed of the terminal according to a beam change, and further determines the third reporting trigger hysteresis value according to the moving speed of the terminal. When determining that the duration in which the measurement result of the first neighboring cell that is obtained through measurement meets the first condition reaches the third reporting trigger hysteresis value, the terminal reports the measurement result of the first neighboring cell to the network device. In this case, the terminal delays a moment of reporting the measurement result of the first neighboring cell. For a prior-art method for estimating a moving speed of the terminal by using only a quantity of cell changes, in this embodiment of this application, a method for estimating a speed status according to a quantity of beam changes can be used as a valid supplement to the existing method. According to the measurement reporting method, by delaying a moment at which the terminal reports a neighboring cell measurement result, an amount of signaling used by the terminal to report measurement results of a plurality of neighboring cells is indirectly reduced, and a waste of signaling resources is effectively reduced.

It should be noted that, although the moving speed of the terminal may be indirectly estimated by using the quantity of beam changes, the terminal may have a capability of directly performing speed measurement. If the terminal reports the speed measurement capability to the network device, the network device may directly configure, for the terminal, an adjustment factor corresponding to a corresponding speed range. When the terminal is within different speed ranges, corresponding adjustment factors are selected to correct a reference reporting trigger hysteresis value.

The following describes a specific implementation in which the terminal determines the third reporting trigger hysteresis value according to the height.

Optionally, if the speed configuration information includes speed information, a fourth reporting trigger hysteresis value (which is used as the reference reporting trigger hysteresis value), and an adjustment factor corresponding to the speed information, the speed information includes a plurality of speed ranges, and at least one of the plurality of speed ranges each corresponds to one adjustment factor, after the terminal determines the moving speed of the terminal, the terminal compares the moving speed of the terminal with the plurality of speed ranges, and determines that the moving speed of the terminal is within the first speed range, and the first speed range further corresponds to a second adjustment factor. Then, the terminal further adjusts the fourth reporting trigger hysteresis value by using the second adjustment factor, to obtain the third reporting trigger hysteresis value. In this case, the terminal reports the measurement report to the network device if the terminal determines that the duration in which the measurement result of the first neighboring cell meets the first condition reaches the third reporting trigger hysteresis value.

Therefore, the terminal may determine the first speed range in the plurality of speed ranges according to the moving speed of the terminal, further adjust the fourth reporting trigger hysteresis value by using the second adjustment factor corresponding to the first speed range, to obtain the third reporting trigger hysteresis value, and use the third reporting trigger hysteresis value as a delay required when the terminal delays reporting the measurement result of the first neighboring cell. In this case, reporting is triggered only when the duration in which the measurement result of the first neighboring cell continuously meets the first condition reaches the third reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced.

It should be noted that, if the terminal determines that the moving speed of the terminal is within the second speed range, and the second speed range corresponds to the fourth reporting trigger hysteresis value, the terminal does not need to adjust the fourth reporting trigger hysteresis value, and directly determines the fourth reporting trigger hysteresis value as the third reporting trigger hysteresis value.

Therefore, the terminal directly uses the fourth reporting trigger hysteresis value as the delay required when the terminal delays reporting the measurement result of the first neighboring cell. In this case, reporting is triggered only when the duration in which the measurement result of the first neighboring cell continuously meets the first condition reaches the fourth reporting trigger hysteresis value. By delaying the moment at which the terminal reports a neighboring cell measurement result, an amount of signaling used by the terminal to report measurement results of a plurality of neighboring cells is indirectly reduced, and a waste of signaling resources is effectively reduced.

In addition, the network device may further configure a cell list for the terminal. In other words, the measurement configuration information further includes the cell list. After receiving the measurement configuration information, the terminal measures the neighboring cell. Only when a measurement result that is of a cell in the cell list and that is obtained by the terminal through measurement meets the first condition, the terminal reports the measurement result of the cell in the cell list to the network device by using the foregoing reporting trigger hysteresis value related to the speed configuration information. A cell identifier in the cell list may be a physical cell ID, or may be a cell index number corresponding to the physical cell ID.

In the prior art, when the terminal can measure a plurality of neighboring cells, these neighboring cells may trigger measurement event reporting for a plurality of times, and content included in each measurement report is a neighboring cell measurement result meeting a measurement event trigger condition. If the network device configures a plurality of events for the terminal, content reported for all measurement events may be a same neighboring cell. Consequently, repeated reporting is caused. For example, an event A3 indicates that signal strength of a neighboring cell is stronger than signal strength of a serving cell by an offset, and an event A4 indicates that signal strength of a neighboring cell is greater than a threshold. When the cell 1 is of relatively high signal strength, both a condition for triggering to report the event A3 and a condition for triggering to report the event A4 are met, and therefore measurement reporting is performed twice. To avoid frequent measurement reporting for a same cell, a measurement event is reported in a periodic reporting mode in this embodiment of this application.

Manner 4: If the measurement configuration information configured by the network device for the terminal in step 401 includes a first period, the terminal periodically reports the measurement report to the network device according to the first period in step 405. In step 404, in other words, after the terminal measures the neighboring cell, if the terminal determines that the measurement result of the first neighboring cell meets the first condition, the measurement report further includes information about a triggered measurement event, or includes information about a triggered measurement event and corresponding trigger duration, and the trigger duration is continuous duration in which a neighboring cell measurement result obtained by the terminal through measurement meets the first condition. As shown in FIG. 11, a reporting period is 30 ms, and a reporting hysteresis value of the event A3 is 50 ms. When the terminal reports the measurement report to the network device for a K^{th} time, in addition to a measurement result of a conventional neighboring cell, the measurement report further includes information about the event A3 that is met by the measurement result of the first cell, and information about trigger duration of 10 ms in which the measurement result of the first cell continuously meets the event A3. For example, the information about the event A3 may be a corresponding measurement ID. When the terminal reports the measurement report to the network device for a (K+1)^{th} time, in addition to the measurement result of the conventional neighboring cell, the measurement report further includes the event A3 that is met by the measurement result of the first cell, trigger duration of 40 ms in which the measurement result of the first cell continuously meets the event A3, an event A3 that is met by a measurement result of a second cell, and trigger duration of 20 ms in which the measurement result of the second cell continuously meets the event A3. When the terminal reports the measurement report to the network device for a (K+2)^{th} time, in addition to the measurement result of the conventional neighboring cell, the measurement report further includes the first cell and the second cell meet a condition for triggering the event A3.

Therefore, the terminal adds information about at least one triggered measurement event to a periodic measurement report; or adds information about at least one triggered measurement event and trigger duration corresponding to the at least one trigger measurement event to the periodic measurement report, and adds a corresponding trigger event to the measurement report to report a neighboring cell measurement result. This indirectly reduces an amount of signaling used by the terminal to report measurement results of a plurality of neighboring cells, and effectively reduces a waste of signaling resources.

It should be noted that, when the measurement configuration information includes different configuration information, the terminal may report the measurement report to the network device in any combination of different manners. For example, it is assumed that the measurement configuration information includes the timer configuration information and the height configuration information, or the measurement configuration information includes the timer configuration information and the speed configuration information. When determining that the measurement result of the first neighboring cell meets the first condition and reporting the measurement result of the first neighboring cell to the network device according to the height configuration information or the speed configuration information, the terminal may first determine whether the timer is in a running state or expires. If the timer is in a running state, the terminal determines whether a quantity of neighboring cells whose measurement results meet the first condition reaches the first threshold N. If the quantity of neighboring cells whose measurement results meet the first condition reaches the first threshold N, the terminal reports the measurement report to the network device, and the measurement report includes the measurement result of the first neighboring cell. If the quantity of neighboring cells whose measurement results meet the first condition does not reach the first threshold N, the terminal may not report the measurement report to the network device until the quantity of neighboring cells whose measurement results meet the first condition reaches the first threshold N. If the timer expires, the terminal directly reports the measurement report to the network device, and the measurement report includes the measurement result of the first neighboring cell. If the measurement configuration information does not include the timer configuration information, when the terminal determines that the measurement result of the first neighboring cell meets the first condition, the terminal directly reports the measurement result of the first neighboring cell to the network device according to the height configuration information or the speed configuration information.

Optionally, the measurement configuration information may alternatively include the timer configuration information, the height configuration information, and the speed configuration information. After the terminal determines that the measurement result of the first neighboring cell meets the first condition, a possible implementation is as follows: The terminal determines the first reporting trigger hysteresis value according to the foregoing implementation used when the measurement configuration information includes the height configuration information, determines the third reporting trigger hysteresis value according to the foregoing implementation used when the measurement configuration information includes the speed configuration information, compares the first reporting trigger hysteresis value with the third reporting trigger hysteresis value, and selects a larger reporting trigger hysteresis value from the first reporting trigger hysteresis value and the third reporting trigger hysteresis value as a final reporting trigger hysteresis value.

In a possible implementation, the height configuration information includes height information, a second reporting trigger hysteresis value (reference reporting trigger hysteresis value), and an adjustment factor corresponding to the height information, the height information includes a plurality of height ranges, and at least one of the plurality of height ranges each corresponds to one adjustment factor. The speed configuration information includes speed information, a fourth reporting trigger hysteresis value (reference reporting trigger hysteresis value), and an adjustment factor corresponding to the speed information, the speed information includes a plurality of speed ranges, and at least one of the plurality of speed ranges each corresponds to one adjustment factor. When the second reporting trigger hysteresis value is the same as the fourth reporting trigger hysteresis value, the terminal determines a first adjustment factor according to the foregoing implementation used when the measurement configuration information includes the height configuration information, and the terminal determines a second adjustment factor according to the foregoing implementation used when the measurement configuration information includes the speed configuration information. Then, the terminal compares the first adjustment factor with the second adjustment factor, and selects a larger adjustment factor from the first adjustment factor and the second adjustment factor to adjust the reference reporting trigger hysteresis value; or the terminal performs a multiplication operation or the like on the first adjustment factor and the second adjustment factor, and determines a finally to-be-used adjustment factor to adjust the reference reporting trigger hysteresis value; or the terminal selects either of the first adjustment factor and the second adjustment factor when the first adjustment factor and the second adjustment factor are the same, to adjust the reference reporting trigger hysteresis value.

When the terminal reports the measurement result of the first neighboring cell to the network device after determining a finally to-be-used reporting trigger hysteresis value according to a case in which the measurement configuration information includes the timer configuration information, the height configuration information, and the speed configuration information and delaying the moment of reporting the measurement result of the first neighboring cell to the network device, the terminal may first determine whether the timer is in a running state or expires. If the timer is in a running state, the terminal determines whether a quantity of neighboring cells whose measurement results meet the first condition reaches the first threshold N. If the quantity of neighboring cells whose measurement results meet the first condition reaches the first threshold N, the terminal reports the measurement report to the network device, and the measurement report includes the measurement result of the first neighboring cell. If the quantity of neighboring cells whose measurement results meet the first condition does not reach the first threshold N, the terminal may not report the measurement report to the network device until the quantity of neighboring cells whose measurement results meet the first condition reaches the first threshold N. If the timer expires, the terminal directly reports the measurement report to the network device, and the measurement report includes the measurement result of the first neighboring cell. If the measurement configuration information does not include the timer configuration information, when the terminal determines that the measurement result of the first neighboring cell meets the first condition, the terminal directly reports the measurement result of the first neighboring cell to the network device according to the height configuration information and the speed configuration information.

It is assumed that the measurement configuration information includes the first period and the height configuration information, or the measurement configuration information includes the first period and the speed configuration information. After the terminal determines, according to the height configuration information or the speed configuration information, that the measurement result of the first neighboring cell meets the first condition. If a moment of reporting the measurement report to the network device in the first period does not arrive, the terminal does not report the measurement report to the network device until the moment of reporting the measurement report to the network device arrives.

406. The network device receives the measurement report reported by the termin al.

After the terminal sends the measurement report to the network device, the network device receives the measurement report sent by the terminal.

In the prior art, when a measurement result of a neighboring cell meets the first condition, an identifier of the neighboring cell is added to a cell trigger list of a related measurement event, and a maximum of 32 cells are stored in the cell trigger list. When the related measurement event is reported, neighboring cells are arranged in descending order of measurement results of the neighboring cells, and only a preset quantity n of neighboring cells are selected for reporting. When the terminal measures a plurality of neighboring cells, the plurality of neighboring cells may all meet the first condition. However, when arrangement is performed according to the measurement results of the neighboring cells, some neighboring cells may not fall within a range of the n neighboring cells. Consequently, the measurement report does not include a neighboring cell in which reporting is triggered.

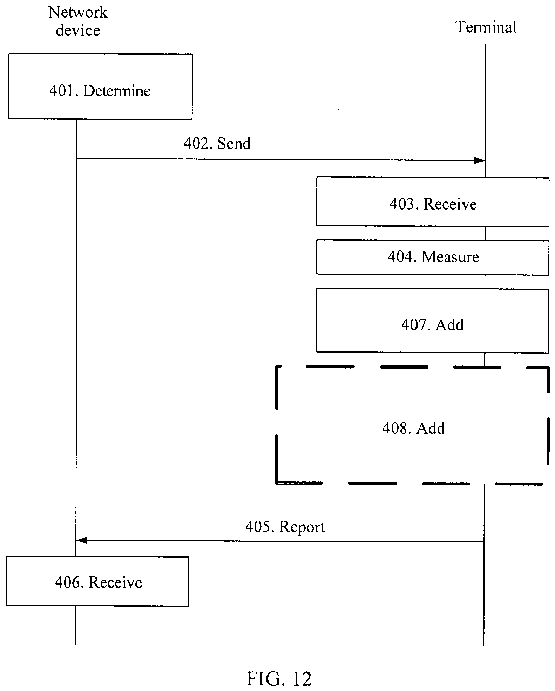

Further, to ensure that a neighboring cell measurement result meeting the first condition is added to the measurement report, as shown in FIG. 12, the terminal may first perform step 407 or step 408 before reporting the measurement report to the network device.

407. The terminal adds measurement results of i neighboring cells to the measurement report.

Herein, i indicates a quantity of neighboring cells whose measurement results need to be reported by the terminal currently, i is a positive integer less than n, n indicates a preset maximum quantity of neighboring cells whose measurement results are to be reported, and both i and n may be preconfigured for the terminal. In other words, the terminal first adds the measurement results of the i neighboring cells to the measurement report, then selects measurement results of n-i neighboring cells from the cell trigger list, and adds the measurement results of the n-i neighboring cells to the measurement report. In this case, the measurement report sent to the network device includes measurement results of the n neighboring cells, including the measurement results that are of the i neighboring cells and that need to be reported currently and the measurement results of the n-i neighboring cells selected from the list of the neighboring cells in which reporting is triggered.

Therefore, the terminal does not need to sort the measurement results of the i neighboring cells and measurement results of neighboring cells included in the list of the neighboring cell in which reporting is triggered, and instead, the terminal directly adds the measurement results of the i neighboring cells to the measurement report, so that the network device can learn of the measurement results that are of the i neighboring cells and that are obtained by the terminal. Optionally, the terminal may indicate, to the network device in the measurement report, that there are i to-be-reported neighboring cells not selected in a sorting sequence in the current measurement report.

408. The terminal adds measurement results of n+j neighboring cells to the measurement report, where n+j indicates a quantity of neighboring cells whose measurement results need to be reported by the terminal currently.

Herein, n indicates a preset maximum quantity of neighboring cells whose measurement results are to be reported, and the measurement results of the n+j neighboring cells include a neighboring cell measurement result that needs to be reported currently. In other words, the terminal first adjusts, according to a quantity of neighboring cell measurement results that need to be reported currently, a maximum quantity of measurement results of neighboring cells that are included in the measurement report to n+j, adds measurement results of j neighboring cells to the measurement report, selects measurement results of n neighboring cells from the cell trigger list, and adds the measurement results of the n neighboring cells to the measurement report. In this case, the measurement report sent to the network device includes the measurement results of the n+j neighboring cells, including the measurement results that are of the j neighboring cells and that need to be reported currently and the measurement results of the n neighboring cells selected from the cell trigger list.

Therefore, the terminal adjusts the maximum quantity of measurement results of the neighboring cells that are included in the measurement report to n+j, and adds the measurement results of the j neighboring cells to the measurement report, so that the network device can learn of the measurement results that are of the j neighboring cells and that are obtained by the terminal. Optionally, the terminal also adds a value of n+j to the measurement report, and reports the value to the network device.

In addition to 407 or 408, optionally, the terminal adjusts the maximum quantity of measurement results of the neighboring cells that are included in the measurement report to m+i, where i indicates a quantity of neighboring cell measurement results that need to be reported by the terminal currently, n indicates a preset maximum quantity of measurement results of neighboring cells, and m < n. To be specific, the terminal adds measurement results of i neighboring cells to the measurement report; selects m measurement results from the cell trigger list when the terminal is to select a neighboring cell measurement result that needs to be reported, where m is less than n; and adds i+m measurement report results to the measurement report.

The solutions provided in the embodiments of this application are mainly described from the perspective of interaction between network elements. It can be understood that each network element, such as a communications apparatus, includes hardware structures and/or software modules for executing corresponding functions, to implement the foregoing functions. A person of ordinary skill in the art should easily be aware that, in combination with the examples described in the algorithm steps of the embodiments disclosed in this specification, the present invention may be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of this application, the communications apparatus may be divided into function modules according to the foregoing method examples. For example, each function module may be obtained through division according to each corresponding function, or two or more functions may be integrated into one processing module. The integrated module may be implemented in a form of hardware, or may be implemented in a form of a software function module. It should be noted that, in the embodiments of this application, module division is an example, and is merely a logical function division. During actual implementation, another division manner may be used.

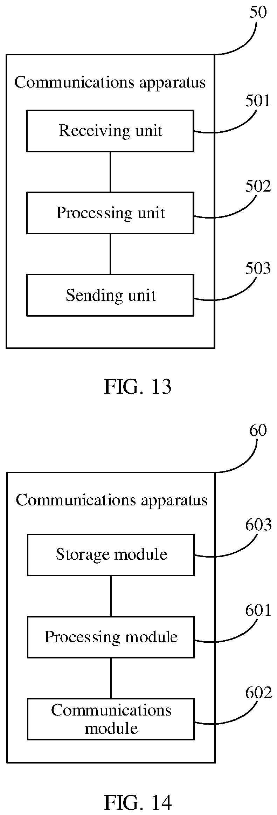

When each function module is obtained through division by using each corresponding function, FIG. 13 is a possible schematic diagram of composition of a communications apparatus in the foregoing embodiments. As shown in FIG. 13, the communications apparatus 50 may include a receiving unit 501, a processing unit 502, and a sending unit 503.

The receiving unit 501 is configured to support the communications apparatus in performing step 403 in the measurement reporting method shown in FIG. 8 and step 403 in the measurement reporting method shown in FIG. 12.

The processing unit 502 is configured to support the communications apparatus in performing step 404 in the measurement reporting method shown in FIG. 8 and steps 404, 407, and 408 in the measurement reporting method shown in FIG. 12.

The sending unit 503 is configured to support the communications apparatus in performing step 405 in the measurement reporting method shown in FIG. 8 and step 405 in the measurement reporting method shown in FIG. 12.

It should be noted that all related content of the steps in the foregoing method embodiments can be cited in functional description of the corresponding function modules. Details are not described herein again.

The communications apparatus provided in this embodiment of this application is configured to perform the foregoing measurement reporting methods, and therefore can achieve a same effect as the foregoing measurement reporting methods.

When an integrated unit is used, FIG. 14 is another possible schematic diagram of composition of a communications apparatus in the foregoing embodiments. As shown in FIG. 14, the communications apparatus 60 includes a processing module 601 and a communications module 602.

The processing module 601 is configured to control and manage an action of the communications apparatus. For example, the processing module 601 is configured to support the communications apparatus in performing step 404 in the measurement reporting method shown in FIG. 8 and steps 404, 407, and 408 in the measurement reporting method shown in FIG. 12, and/or is configured to perform another process in the technology described in this specification. The communications module 602 is configured to support the communications apparatus in communicating with another network entity, for example, communicating with the network device shown in FIG. 8 or FIG. 12. The communications apparatus may further include a storage module 603, configured to store program code and data of the communications apparatus.

The processing module 601 may be a processor or a controller. The processor/controller may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 602 may be a transceiver, a transceiver circuit, a communications interface, or the like. The storage module 603 may be a memory.

When the processing module 601 is a processor, the communications module 602 is a communications interface, and the storage module 603 is a memory, the communications apparatus in this embodiment of this application may be the terminal shown in FIG. 7.

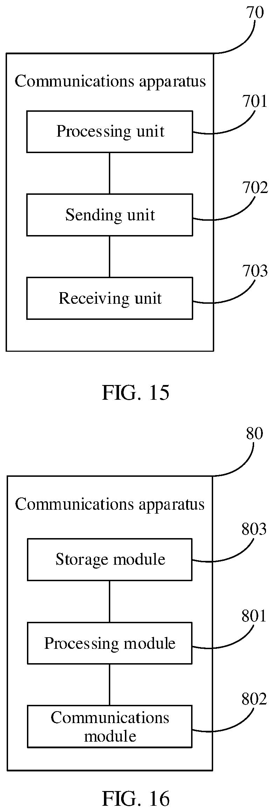

When each function module is obtained through division by using each corresponding function, FIG. 15 is a possible schematic diagram of composition of a communications apparatus in the foregoing embodiments. As shown in FIG. 15, the communications apparatus 70 may include a processing unit 701, a sending unit 702, and a receiving unit 703.

The processing unit 701 is configured to support the communications apparatus in performing step 401 in the measurement reporting method shown in FIG. 8 and step 401 in the measurement reporting method shown in FIG. 12.

The sending unit 702 is configured to support the communications apparatus in performing step 402 in the measurement reporting method shown in FIG. 8 and step 402 in the measurement reporting method shown in FIG. 12.

The receiving unit 703 is configured to support the communications apparatus in performing step 406 in the measurement reporting method shown in FIG. 8 and step 406 in the measurement reporting method shown in FIG. 12.

It should be noted that all related content of the steps in the foregoing method embodiments can be cited in functional description of the corresponding function modules. Details are not described herein again.

The communications apparatus provided in this embodiment of this application is configured to perform the foregoing measurement reporting methods, and therefore can achieve a same effect as the foregoing measurement reporting methods.

When an integrated unit is used, FIG. 16 is another possible schematic diagram of composition of a communications apparatus in the foregoing embodiments. As shown in FIG. 16, the communications apparatus 80 includes a processing module 801 and a communications module 802.

The processing module 801 is configured to control and manage an action of the communications apparatus. For example, the processing module 801 is configured to support the communications apparatus in performing step 401 performed by the network device shown in FIG. 8 and step 401 in the measurement reporting method shown in FIG. 12, and/or is configured to perform another process in the technology described in this specification. The communications module 802 is configured to support the communications apparatus in communicating with another network entity, for example, communicating with the terminal shown in FIG. 8 or FIG. 12. The communications apparatus may further include a storage module 803, configured to store program code and data of the communications apparatus.

The processing module 801 may be a processor or a controller. The processor/controller may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 802 may be a transceiver, a transceiver circuit, a communications interface, or the like. The storage module 803 may be a memory.

When the processing module 801 is a processor, the communications module 802 is a transceiver, and the storage module 803 is a memory, the communications apparatus in this embodiment of this application may be the network device shown in FIG. 6.

The foregoing descriptions about implementations allow a person skilled in the art to understand that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above.

In the several embodiments provided in this application, it should be understood that, within the scope of the appended claims, the disclosed apparatus and method may be implemented in other manners. For example, the described apparatus embodiments are merely examples. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, and may be located in one location, or may be distributed on different locations. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. According to such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A measurement reporting method, comprising:
receiving (403), by a terminal (50), measurement configuration information sent by a network device (80), wherein the measurement configuration information is for reporting a neighboring cell measurement result by the terminal (50), and the measurement configuration information comprises at least one of timer configuration information, height configuration information, and speed configuration information; and
measuring (404), by the terminal (50), a neighboring cell, and reporting (405) a measurement report to the network device (80) according to the measurement configuration information, wherein
the measurement report comprises a measurement result of at least one neighboring cell, the measurement result of the at least one neighboring cell meets a first condition, and the first condition is a measurement event entering condition or a measurement event leaving condition;
wherein when the measurement configuration information comprises the height configuration information, the measuring (404), by the terminal (50), a neighboring cell, and reporting a measurement report to the network device (80) according to the measurement configuration information specifically comprises:
determining, by the terminal (50), a height of the terminal, and determining a first reporting trigger time hysteresis value according to the height; and
reporting, by the terminal (50), the measurement report to the network device (80) when the terminal (50) determines that duration in which a measurement result of a first neighboring cell meets the first condition reaches the first reporting trigger time hysteresis value, wherein the measurement report comprises the measurement result of the first neighboring cell;
**characterized in that** the height configuration information comprises height information, a second reporting trigger time hysteresis value, and an adjustment factor corresponding to the height information, the height information comprises a plurality of height ranges, each corresponding to one reporting trigger time hysteresis value, wherein at least one of the plurality of height ranges corresponds to the adjustment factor and wherein at least another one of the plurality of height ranges corresponds to the second reporting trigger time hysteresis value; and
**in that** the determining, by the terminal (50), a height of the terminal (50), and determining a first reporting trigger time hysteresis value according to the height specifically comprises:
determining, by the terminal (50), that the height is within a first height range in the plurality of height ranges, wherein the first height range corresponds to the adjustment factor, and determining the first reporting trigger time hysteresis value according to the adjustment factor and the second reporting trigger time hysteresis value; or
determining, by the terminal (50), that the height is within a second height range in the plurality of height ranges, wherein the second height range corresponds to the second reporting trigger time hysteresis value, and the first reporting trigger time hysteresis value is equal to the second reporting trigger time hysteresis value.

2. The method according to claim 1, wherein when the measurement configuration information further comprises the timer configuration information, the timer configuration information comprises timer duration; and
the measuring (404), by the terminal (50), a neighboring cell, and reporting (405) a measurement report to the network device (80) according to the measurement configuration information specifically comprises:
reporting, by the terminal (50), the measurement report to the network device (80) when the terminal (50) determines, according to the timer duration, that a timer expires, wherein the measurement report comprises the measurement result that is of the at least one neighboring cell and that meets the first condition when the timer is in a running state; or
reporting, by the terminal (50), the measurement report to the network device (80) when the terminal (50) determines that a quantity of neighboring cells whose measurement results meet the first condition reaches a first threshold N when the timer is in a running state, wherein the measurement report comprises the measurement results of the N neighboring cells, and N is a positive integer; and
the timer is configured according to the timer configuration information, and the first threshold N is predefined or is indicated by the network device (80).

3. The method according to claim 2, wherein the measuring (404), by the terminal (50), a neighboring cell specifically comprises:
starting, by the terminal (50), the timer when determining that a measurement result of a neighboring cell meets the first condition.

4. A measurement reporting method, comprising:
sending (402), by a network device (80), measurement configuration information to a terminal (50), wherein the measurement configuration information is used by the terminal (50) to report a neighboring cell measurement result, and the measurement configuration information comprises at least one of timer configuration information, height configuration information, and speed configuration information; and
receiving (406), by the network device (80), a measurement report reported by the terminal (50), wherein the measurement report comprises a measurement result of at least one neighboring cell, the measurement result of the at least one neighboring cell meets a first condition, and the first condition is a measurement event entering condition or a measurement event leaving condition;
**characterized in that** the height configuration information comprises height information, a first reporting trigger time hysteresis value, and an adjustment factor corresponding to the height information, the height information comprises a plurality of height ranges, each corresponding to one reporting trigger time hysteresis value, wherein at least one of the plurality of height ranges corresponds to the adjustment factor and wherein at least another one of the plurality of height ranges corresponds to the first reporting trigger time hysteresis value.

5. The method according to claim 4, wherein the timer configuration information comprises timer duration, the measurement configuration information further comprises a first threshold N, the timer configuration information and the first threshold N are used to instruct the terminal device to report the measurement report, and the first threshold N is predefined or is indicated by the network device (80).

6. The method according to claim 4, wherein the speed configuration information comprises speed information, a second reporting trigger time hysteresis value, and a further adjustment factor corresponding to the speed information, the speed information comprises a plurality of speed ranges, and at least one of the plurality of speed ranges corresponds to the further adjustment factor.

7. A communications apparatus (50), comprising:
a receiving unit (501), configured to receive measurement configuration information sent by a network device (80), wherein the measurement configuration information is used by the communications apparatus (50) to report a neighboring cell measurement result, and the measurement configuration information comprises at least one of timer configuration information, height configuration information, and speed configuration information;
a processing unit (502), configured to measure a neighboring cell, and generate a measurement report according to the measurement configuration information; and
a sending unit (503), configured to report the measurement report to the network device (80), wherein
the measurement report comprises a measurement result of at least one neighboring cell, the measurement result of the at least one neighboring cell meets a first condition, and the first condition is a measurement event entering condition or a measurement event leaving condition;
wherein when the measurement configuration information comprises the height configuration information, the processing unit (502) is specifically configured to:
determine a height of the communications apparatus (50), determine a first reporting trigger time hysteresis value according to the height, and determine that duration in which a measurement result of a first neighboring cell meets the first condition reaches the first reporting trigger time hysteresis value; and
the sending unit (503) is specifically configured to report the measurement report to the network device (80), wherein the measurement report comprises the measurement result of the first neighboring cell;
**characterized in that** the height configuration information comprises height information, a second reporting trigger time hysteresis value, and an adjustment factor corresponding to the height information, the height information comprises a plurality of height ranges, each corresponding to one reporting trigger time hysteresis value, wherein at least one of the plurality of height ranges corresponds to the adjustment factor and wherein at least another one of the plurality of height ranges corresponds to the second reporting trigger time hysteresis value; and
**in that** the communications apparatus (50) is specifically configured to:
determine that the height is within a first height range in the plurality of height ranges, wherein the first height range corresponds to the adjustment factor, and determining the first reporting trigger time hysteresis value according to the adjustment factor and the second reporting trigger time hysteresis value; or
determine that the height is within a second height range in the plurality of height ranges, wherein the second height range corresponds to the second reporting trigger time hysteresis value, and the first reporting trigger time hysteresis value is equal to the second reporting trigger time hysteresis value.

8. The communications apparatus (50) according to claim 7, wherein when the measurement configuration information further comprises the timer configuration information, the timer configuration information comprises timer duration;
the processing unit (502) is further configured to determine, according to the timer duration, that a timer expires; and
the sending unit (503) is specifically configured to report the measurement report to the network device, wherein the measurement report comprises the measurement result that is of the at least one neighboring cell and that meets the first condition when the timer is in a running state; or
the processing unit (502) is further configured to determine that a quantity of neighboring cells whose measurement results meet the first condition reaches a first threshold N when the timer is in a running state; and
the sending unit (503) is specifically configured to report the measurement report to the network device, wherein the measurement report comprises the measurement results of the N neighboring cells, and N is a positive integer, wherein
the timer is configured according to the timer configuration information, and the first threshold N is predefined or is indicated by the network device (80).

9. The communications apparatus (50) according to claim 8, wherein the processing unit (502) is specifically configured to:
start the timer when a measurement result of a neighboring cell meets the first condition.

## Patentansprüche

1. Messwertberichtverfahren, das Folgendes umfasst:
Empfangen (403), durch ein Endgerät (50), von durch eine Netzwerkvorrichtung (80) gesendeten Messwertkonfigurationsinformationen, wobei die Messwertkonfigurationsinformationen zum Berichten eines Messwertergebnisses benachbarter Zellen durch das Endgerät (50) dienen und die Messwertkonfigurationsinformationen mindestens eines von Zeitgeberkonfigurationsinformationen,
Höhenkonfigurationsinformationen und Geschwindigkeitskonfigurationsinformationen umfassen; und
Messen (404), durch das Endgerät (50), einer benachbarten Zelle und Berichten (405) eines Messwertberichts an die Netzwerkvorrichtung (80) gemäß den Messwertkonfigurationsinformationen, wobei der Messwertbericht ein Messwertergebnis mindestens einer benachbarten Zelle umfasst, das Messwertergebnis der mindestens einen benachbarten Zelle eine erste Bedingung erfüllt und die erste Bedingung eine Messwertereigniseingangsbedingung oder eine Messwertereignisausgangsbedingung ist;
wobei, wenn die Messwertkonfigurationsinformationen die Höhenkonfigurationsinformationen umfassen, das Messen (404) einer benachbarten Zelle und das Berichten eines Messwertberichts durch das Endgerät (50) an die Netzwerkvorrichtung (80) gemäß den Messwertkonfigurationsinformationen speziell Folgendes umfasst:
Bestimmen, durch das Endgerät (50), einer Höhe des Endgeräts und Bestimmen eines ersten Hysteresewerts für die Auslösezeit des Berichtens gemäß der Höhe; und
Berichten, durch das Endgerät (50), des Messwertberichts an die Netzwerkvorrichtung (80), wenn das Endgerät (50) bestimmt, dass die Dauer, in der ein Messwertergebnis einer ersten benachbarten Zelle die erste Bedingung erfüllt, den ersten Hysteresewert für die Auslösezeit des Berichtens erreicht, wobei der Messwertbericht das Messwertergebnis der ersten benachbarten Zelle umfasst;
**dadurch gekennzeichnet, dass** die Höhenkonfigurationsinformationen Höheninformationen, einen zweiten Hysteresewert für die Auslösezeit des Berichtens und einen Anpassungsfaktor umfassen, der den Höheninformationen entspricht, wobei die Höheninformationen eine Vielzahl von Höhenbereichen umfassen, wobei jeder einem Hysteresewert für die Auslösungszeit des Berichtens entspricht, wobei mindestens einer der Vielzahl von Höhenbereichen dem Anpassungsfaktor entspricht und wobei mindestens ein anderer der Vielzahl von Höhenbereichen dem zweiten Hysteresewert für die Auslösezeit des Berichtens entspricht; und
dadurch, dass Bestimmen, durch das Endgerät (50), einer Höhe des Endgeräts (50) und Bestimmen eines ersten Hysteresewerts für die Auslösezeit des Berichtens gemäß der Höhe speziell Folgendes umfasst:
Bestimmen, durch das Endgerät (50), dass die Höhe innerhalb eines ersten Höhenbereichs in der Vielzahl von Höhenbereichen liegt, wobei der erste Höhenbereich dem Anpassungsfaktor entspricht, und Bestimmen des ersten Hysteresewerts für die Auslösezeit des Berichtens gemäß dem Anpassungsfaktor und des zweiten Hysteresewerts für die Auslösezeit des Berichtens; oder
Bestimmen, durch das Endgerät (50), dass die Höhe innerhalb eines zweiten Höhenbereichs in der Vielzahl von Höhenbereichen liegt, wobei der zweite Höhenbereich dem zweiten Hysteresewert für die Auslösezeit des Berichtens entspricht und der erste Hysteresewert für die Auslösezeit des Berichtens gleich dem zweiten Hysteresewert für die Auslösezeit des Berichtens ist.

2. Verfahren nach Anspruch 1, wobei, wenn die Messwertkonfigurationsinformationen ferner die Zeitgeberkonfigurationsinformationen umfassen, die Zeitgeberkonfigurationsinformationen die Zeitgeberdauer umfassen; und
das Messen (404), durch das Endgerät (50), einer benachbarten Zelle und Berichten (405) eines Messwertberichts an die Netzwerkvorrichtung (80) gemäß den Messwertkonfigurationsinformationen speziell Folgendes umfasst:
Berichten, durch das Endgerät (50), des Messwertberichts an die Netzwerkvorrichtung (80), wenn das Endgerät (50) gemäß der Zeitgeberdauer bestimmt, dass ein Zeitgeber abläuft, wobei der Messwertbericht das Messwertergebnis umfasst, das von der mindestens einen benachbarten Zelle stammt und die erste Bedingung erfüllt, wenn sich der Zeitgeber in einem laufenden Zustand befindet; oder
Berichten, durch das Endgerät (50), des Messwertberichts an die Netzwerkvorrichtung (80), wenn das Endgerät (50) bestimmt, dass eine Menge benachbarter Zellen, deren Messwertergebnisse die erste Bedingung erfüllen, einen ersten Schwellenwert N erreicht, wenn sich der Zeitgeber in einem laufenden Zustand befindet, wobei der Messwertbericht die Messwertergebnisse der N benachbarten Zellen umfasst und N eine positive ganze Zahl ist; und
der Zeitgeber gemäß den Zeitgeberkonfigurationsinformationen konfiguriert ist, und der erste Schwellenwert N vordefiniert ist oder durch die Netzwerkvorrichtung (80) angegeben ist.

3. Verfahren nach Anspruch 2, wobei das Messen (404) durch das Endgerät (50) einer benachbarten Zelle speziell Folgendes umfasst:
Starten, durch das Endgerät (50), des Zeitgebers, wenn bestimmt wird, dass ein Messergebnis einer benachbarten Zelle die erste Bedingung erfüllt.

4. Messwertberichtverfahren, das Folgendes umfasst:
Senden (402), durch eine Netzwerkvorrichtung (80), von Messwertkonfigurationsinformationen an ein Endgerät (50), wobei die Messwertkonfigurationsinformationen durch das Endgerät (50) verwendet werden, um ein Messwertergebnis einer benachbarten Zelle zu berichten und die Messwertkonfigurationsinformationen mindestens eines von Zeitgeberkonfigurationsinformationen,
Höhenkonfigurationsinformationen und Geschwindigkeitskonfigurationsinformationen umfassen; und
Empfangen (406), durch eine Netzwerkvorrichtung (80), eines Messwertberichts, der durch das Endgerät (50) berichtet ist, wobei der Messwertbericht ein Messergebnis mindestens einer benachbarten Zelle umfasst, das Messwertergebnis der mindestens einen benachbarten Zelle eine erste Bedingung erfüllt und die erste Bedingung eine Messwertereigniseingangsbedingung oder eine Messwertereignisausgangsbedingung ist;
**dadurch gekennzeichnet, dass** die Höhenkonfigurationsinformationen Höheninformationen, einen ersten Hysteresewert für die Auslösezeit des Berichtens und einen Anpassungsfaktor umfassen, der den Höheninformationen entspricht, wobei die Höheninformationen eine Vielzahl von Höhenbereichen umfassen, wobei jeder einem Hysteresewert für die Auslösezeit des Berichtens entsprechen, wobei
mindestens einer der Vielzahl von Höhenbereichen dem Anpassungsfaktor entspricht und wobei mindestens ein anderer der Vielzahl von Höhenbereichen dem ersten Hysteresewert für die Auslösezeit des Berichtens entspricht.

5. Verfahren nach Anspruch 4, wobei die Zeitgeberkonfigurationsinformationen eine Zeitgeberdauer umfassen, die Messwertkonfigurationsinformationen ferner einen ersten Schwellenwert N umfassen, die Zeitgeberkonfigurationsinformationen und der erste Schwellenwert N dazu verwendet werden, die Endgerätevorrichtung dazu anzuweisen, den Messwertbericht zu berichten, und der erste Schwellenwert N vordefiniert ist oder durch die Netzwerkvorrichtung (80) angegeben wird.

6. Verfahren nach Anspruch 4, wobei die Geschwindigkeitskonfigurationsinformationen Geschwindigkeitsinformationen, einen zweiten Hysteresewert für die Auslösezeit des Berichtens und einen weiteren Anpassungsfaktor umfassen, der den Geschwindigkeitsinformationen entspricht, die Geschwindigkeitsinformationen eine Vielzahl von Geschwindigkeitsbereichen umfassen und mindestens einer der Vielzahl von Geschwindigkeitsbereichen dem weiteren Einstellfaktor entspricht.

7. Kommunikationseinrichtung (50), die Folgendes umfasst:
eine Empfangseinheit (501), die dazu konfiguriert ist, Messwertkonfigurationsinformationen zu empfangen, die durch eine Netzwerkvorrichtung (80) gesendet sind, wobei die Messwertkonfigurationsinformationen durch die Kommunikationseinrichtung (50) verwendet werden, um ein Messwertergebnis einer benachbarten Zelle zu berichten und die Messwertkonfigurationsinformationen mindestens eines von Zeitgeberkonfigurationsinformationen, Höhenkonfigurationsinformationen und Geschwindigkeitskonfigurationsinformationen umfassen;
eine Verarbeitungseinheit (502), die dazu konfiguriert ist, eine benachbarte Zelle zu messen und einen Messwertbericht gemäß den Messwertkonfigurationsinformationen zu erzeugen; und
eine Sendeeinheit (503), die dazu konfiguriert ist, den Messwertbericht an die Netzwerkvorrichtung (80) zu berichten, wobei
der Messwertbericht ein Messwertergebnis mindestens einer benachbarten Zelle umfasst, das Messwertergebnis der mindestens einen benachbarten Zelle eine erste Bedingung erfüllt und die erste Bedingung eine Messwertereigniseingangsbedingung oder eine Messwertereignisausgangsbedingung ist;
wobei, wenn die Messwertkonfigurationsinformationen die Höhenkonfigurationsinformationen umfassen, die Verarbeitungseinheit (502) speziell zu Folgendem konfiguriert ist: Bestimmen einer Höhe der Kommunikationseinrichtung (50), Bestimmen eines ersten Hysteresewerts für die Auslösezeit des Berichtens gemäß der Höhe und Bestimmen, dass eine Dauer, in der ein Messwertergebnis einer ersten benachbarten Zelle die erste Bedingung erfüllt, den ersten Hysteresewert für die Auslösezeit des Berichtens erreicht; und
die Sendeeinheit (503) speziell dazu konfiguriert ist, den Messwertbericht an die Netzwerkvorrichtung (80) zu berichten, wobei der Messwertbericht das Messwertergebnis der ersten benachbarten Zelle umfasst;
**dadurch gekennzeichnet, dass** die Höhenkonfigurationsinformationen Höheninformationen, einen zweiten Hysteresewert für die Auslösezeit des Berichtens und einen Anpassungsfaktor umfassen, der den Höheninformationen entspricht, wobei die Höheninformationen eine Vielzahl von Höhenbereichen umfassen, wobei jeder einem Hysteresewert für die Auslösungszeit des Berichtens entsprechen, wobei mindestens einer der Vielzahl von Höhenbereichen dem Anpassungsfaktor entspricht und wobei mindestens ein anderer der Vielzahl von Höhenbereichen dem zweiten Hysteresewert für die Auslösezeit des Berichtens entspricht; und
dass die Kommunikationseinrichtung (50) speziell zu Folgendem konfiguriert ist:
Bestimmen, dass die Höhe innerhalb eines ersten Höhenbereichs in der Vielzahl von Höhenbereichen liegt, wobei der erste Höhenbereich dem Anpassungsfaktor entspricht, und Bestimmen des ersten Hysteresewerts für die Auslösezeit des Berichtens gemäß dem Anpassungsfaktor und des zweiten Hysteresewerts für die Auslösezeit des Berichtens; oder
Bestimmen, dass die Höhe innerhalb eines zweiten Höhenbereichs in der Vielzahl von Höhenbereichen liegt, wobei der zweite Höhenbereich dem zweiten Hysteresewert für die Auslösezeit des Berichtens entspricht und der erste Hysteresewert für die Auslösezeit des Berichtens gleich dem zweiten Hysteresewert für die Auslösezeit des Berichtens ist.

8. Kommunikationseinrichtung (50) nach Anspruch 7, wobei, wenn die Messwertkonfigurationsinformationen ferner die Zeitgeberkonfigurationsinformationen umfassen, die Zeitgeberkonfigurationsinformationen die Zeitgeberdauer umfassen;
die Verarbeitungseinheit (502) ferner dazu konfiguriert ist, gemäß der Zeitgeberdauer zu bestimmen, dass ein Zeitgeber abläuft; und
die Sendeeinheit (503) speziell dazu konfiguriert ist, den Messwertbericht an die Netzwerkvorrichtung zu berichten, wobei der Messwertbericht das Messwertergebnis umfasst, das von der mindestens einen benachbarten Zelle stammt und die erste Bedingung erfüllt, wenn sich der Zeitgeber in einem laufenden Zustand befindet; oder
die Verarbeitungseinheit (502) ferner dazu konfiguriert ist, zu bestimmen, dass eine Menge benachbarter Zellen, deren Messwertergebnisse die erste Bedingung erfüllen, einen ersten Schwellenwert N erreicht, wenn sich der Zeitgeber in einem laufenden Zustand befindet; und
die Sendeeinheit (503) speziell dazu konfiguriert ist, den Messwertbericht an die Netzwerkvorrichtung zu berichten, wobei der Messwertbericht die Messwertergebnisse der N benachbarten Zellen umfasst und N eine positive Ganzzahl ist; wobei der Zeitgeber gemäß den Zeitgeberkonfigurationsinformationen konfiguriert ist, und der erste Schwellenwert N vordefiniert ist oder durch die Netzwerkvorrichtung (80) angegeben ist.

9. Kommunikationseinrichtung (50) nach Anspruch 8, wobei die Verarbeitungseinheit (502) speziell zu Folgendem konfiguriert ist:
Starten des Zeitgebers, wenn ein Messwertergebnis einer benachbarten Zelle die erste Bedingung erfüllt.

## Revendications

1. Procédé de rapport de mesure, comprenant :
la réception (403), par un terminal (50), d'informations de configuration de mesure envoyées par un dispositif de réseau (80), dans lequel les informations de configuration de mesure sont destinées à rapporter un résultat de mesure de cellule voisine par le terminal (50), et les informations de configuration de mesure comprennent au moins une parmi des informations de configuration de temporisateur, des informations de configuration de hauteur et des informations de configuration de vitesse ; et
la mesure (404), par le terminal (50), d'une cellule voisine, et le rapport (405) d'un rapport de mesure au dispositif de réseau (80) en fonction des informations de configuration de mesure, dans lequel
le rapport de mesure comprend un résultat de mesure d'au moins une cellule voisine, le résultat de mesure de l'au moins une cellule voisine satisfait à une première condition, et la première condition est une condition d'entrée d'événement de mesure ou une condition de sortie d'événement de mesure ;
dans lequel, lorsque les informations de configuration de mesure comprennent les informations de configuration de hauteur, la mesure (404), par le terminal (50), d'une cellule voisine, et le rapport d'un rapport de mesure au dispositif de réseau (80) en fonction des informations de configuration de mesure comprend spécifiquement :
la détermination, par le terminal (50), d'une hauteur du terminal, et la détermination d'une première valeur d'hystérésis de temps de déclenchement de rapport en fonction de la hauteur ; et
le rapport, par le terminal (50), du rapport de mesure au dispositif de réseau (80) lorsque le terminal (50) détermine que la durée pendant laquelle un résultat de mesure d'une première cellule voisine satisfait à la première condition atteint la première valeur d'hystérésis de temps de déclenchement de rapport, dans lequel le rapport de mesure comprend le résultat de mesure de la première cellule voisine ;
**caractérisé en ce que** les informations de configuration de hauteur comprennent des informations de hauteur, une seconde valeur d'hystérésis de temps de déclenchement de rapport et un facteur d'ajustement correspondant aux informations de hauteur,
les informations de hauteur comprennent une pluralité de plages de hauteur, chacune correspondant à une valeur d'hystérésis de temps de déclenchement de rapport, dans lequel au moins une de la pluralité de plages de hauteur correspond au facteur d'ajustement et dans lequel au moins une autre de la pluralité de plages de hauteur correspond à la seconde valeur d'hystérésis de temps de déclenchement de rapport ; et
**en ce que** la détermination, par le terminal (50), d'une hauteur du terminal (50), et la détermination d'une première valeur d'hystérésis de temps de déclenchement de rapport en fonction de la hauteur comprend spécifiquement :
la détermination, par le terminal (50), que la hauteur est dans une première plage de hauteur dans la pluralité de plages de hauteur, dans lequel la première plage de hauteur correspond au facteur d'ajustement, et la détermination de la première valeur d'hystérésis de temps de déclenchement de rapport en fonction du facteur d'ajustement et de la seconde valeur d'hystérésis de temps de déclenchement de rapport ; ou
la détermination, par le terminal (50), que la hauteur est dans une seconde plage de hauteur dans la pluralité de plages de hauteur, dans lequel la seconde plage de hauteur correspond à la seconde valeur d'hystérésis de temps de déclenchement de rapport, et la première valeur d'hystérésis de temps de déclenchement de rapport est égale à la seconde valeur d'hystérésis de temps de déclenchement de rapport.

2. Procédé selon la revendication 1, dans lequel, lorsque les informations de configuration de mesure comprennent en outre les informations de configuration de temporisateur, les informations de configuration de temporisateur comprennent la durée de temporisateur ; et
la mesure (404), par le terminal (50), d'une cellule voisine, et le rapport (405) d'un rapport de mesure au dispositif de réseau (80) en fonction des informations de configuration de mesure comprend spécifiquement :
le rapport, par le terminal (50), du rapport de mesure au dispositif de réseau (80) lorsque le terminal (50) détermine, en fonction de la durée de temporisateur, qu'un temporisateur expire, dans lequel le rapport de mesure comprend le résultat de mesure qui est au moins celui d'une cellule voisine et qui satisfait à la première condition lorsque le temporisateur est dans un état de fonctionnement ; ou
le rapport, par le terminal (50), du rapport de mesure au dispositif de réseau (80) lorsque le terminal (50) détermine qu'une quantité de cellules voisines dont les résultats de mesure satisfont à la première condition atteint un premier seuil N lorsque le temporisateur est dans un état de fonctionnement, dans lequel le rapport de mesure comprend les résultats de mesure des N cellules voisines, et N est un entier positif ; et
le temporisateur est configuré en fonction des informations de configuration de temporisateur, et le premier seuil N est prédéfini ou est indiqué par le dispositif de réseau (80).

3. Procédé selon la revendication 2, dans lequel la mesure (404), par le terminal' (50), d'une cellule voisine comprend spécifiquement :
le déclenchement, par le terminal (50), du temporisateur lors de la détermination qu'un résultat de mesure d'une cellule voisine satisfait à la première condition.

4. Procédé de rapport de mesure, comprenant :
l'envoi (402), par un dispositif de réseau (80), d'informations de configuration de mesure à un terminal (50), dans lequel les informations de configuration de mesure sont utilisées par le terminal (50) pour rapporter un résultat de mesure de cellule voisine, et les informations de configuration de mesure comprennent au moins une parmi des informations de configuration de temporisateur, des informations de configuration de hauteur et des informations de configuration de vitesse ; et
la réception (406), par le dispositif de réseau (80), d'un rapport de mesure rapporté par le terminal (50), dans lequel le rapport de mesure comprend un résultat de mesure d'au moins une cellule voisine, le résultat de mesure de l'au moins une cellule voisine satisfait à une première condition, et la première condition est une condition d'entrée d'événement de mesure ou une condition de sortie d'événement de mesure ;
**caractérisé en ce que** les informations de configuration de hauteur comprennent des informations de hauteur, une première valeur d'hystérésis de temps de déclenchement de rapport et un facteur d'ajustement correspondant aux informations de hauteur, les informations de hauteur comprennent une pluralité de plages de hauteur, chacune correspondant à une valeur d'hystérésis de temps de déclenchement de rapport, dans lequel
au moins une de la pluralité de plages de hauteur correspond au facteur d'ajustement et dans lequel au moins une autre de la pluralité de plages de hauteur correspond à la première valeur d'hystérésis de temps de déclenchement de rapport.

5. Procédé selon la revendication 4, dans lequel les informations de configuration de temporisateur comprennent la durée de temporisateur, les informations de configuration de mesure comprennent en outre un premier seuil N, les informations de configuration de temporisateur et le premier seuil N sont utilisés pour ordonner au dispositif terminal de rapporter le rapport de mesure, et le premier seuil N est prédéfini ou est indiqué par le dispositif de réseau (80).

6. Procédé selon la revendication 4, dans lequel les informations de configuration de vitesse comprennent des informations de vitesse, une seconde valeur d'hystérésis de temps de déclenchement de rapport et un autre facteur d'ajustement correspondant aux informations de vitesse, les informations de vitesse comprennent une pluralité de plages de vitesse, et au moins l'une parmi la pluralité de plages de vitesse correspond à l'autre facteur d'ajustement.

7. Appareil de communication (50), comprenant :
une unité de réception (501), configurée pour recevoir des informations de configuration de mesure envoyées par un dispositif de réseau (80), dans lequel les informations de configuration de mesure sont utilisées par l'appareil de communication (50) pour rapporter un résultat de mesure de cellule voisine, et les informations de configuration de mesure comprennent au moins une parmi des informations de configuration de temporisateur, des informations de configuration de hauteur et des informations de configuration de vitesse ;
une unité de traitement (502), configurée pour mesurer une cellule voisine, et générer un rapport de mesure en fonction des informations de configuration de mesure ; et
une unité d'envoi (503), configurée pour rapporter le rapport de mesure au dispositif de réseau (80), dans lequel le rapport de mesure comprend un résultat de mesure d'au moins une cellule voisine, le résultat de mesure de l'au moins une cellule voisine satisfait à une première condition, et la première condition est une condition d'entrée d'événement de mesure ou une condition de sortie d'événement de mesure ;
dans lequel, lorsque les informations de configuration de mesure comprennent les informations de configuration de hauteur, l'unité de traitement (502) est spécifiquement configurée pour :
déterminer une hauteur de l'appareil de communication (50),
déterminer une première valeur d'hystérésis de temps de déclenchement de rapport en fonction de la hauteur, et
déterminer que la durée pendant laquelle un résultat de mesure d'une première cellule voisine satisfait à la première condition atteint la première valeur d'hystérésis de temps de déclenchement de rapport ; et
l'unité d'envoi (503) est spécifiquement configurée pour rapporter le rapport de mesure au dispositif de réseau (80), dans lequel le rapport de mesure comprend le résultat de mesure de la première cellule voisine ;
**caractérisé en ce que** les informations de configuration de hauteur comprennent des informations de hauteur, une seconde valeur d'hystérésis de temps de déclenchement de rapport et un facteur d'ajustement correspondant aux informations de hauteur, les informations de hauteur comprennent une pluralité de plages de hauteur, chacune correspondant à une valeur d'hystérésis de temps de déclenchement de rapport, dans lequel au moins une de la pluralité de plages de hauteur correspond au facteur d'ajustement et dans lequel au moins une autre de la pluralité de plages de hauteur correspond à la seconde valeur d'hystérésis de temps de déclenchement de rapport ; et
**en ce que** l'appareil de communication (50) est spécifiquement configuré pour :
déterminer que la hauteur est dans une première plage de hauteur dans la pluralité de plages de hauteur, dans lequel la première plage de hauteur correspond au facteur d'ajustement, et la détermination de la première valeur d'hystérésis de temps de déclenchement de rapport en fonction du facteur d'ajustement et la seconde valeur d'hystérésis de temps de déclenchement de rapport ; ou
déterminer que la hauteur est dans une seconde plage de hauteur dans la pluralité de plages de hauteur, dans lequel la seconde plage de hauteur correspond à la seconde valeur d'hystérésis de temps de déclenchement de rapport, et la première valeur d'hystérésis de temps de déclenchement de rapport est égale à la seconde valeur d'hystérésis de temps de déclenchement de rapport.

8. Appareil de communication (50) selon la revendication 7, dans lequel, lorsque les informations de configuration de mesure comprennent en outre les informations de configuration de temporisateur, les informations de configuration de temporisateur comprennent la durée de temporisateur ;
l'unité de traitement (502) est en outre configurée pour déterminer, en fonction de la durée de temporisateur, qu'un temporisateur expire ; et
l'unité d'envoi (503) est spécifiquement configurée pour rapporter le rapport de mesure au dispositif de réseau, dans lequel le rapport de mesure comprend le résultat de mesure qui est au moins celui d'une cellule voisine et qui satisfait à la première condition lorsque le temporisateur est dans un état de fonctionnement ; ou
l'unité de traitement (502) est en outre configurée pour déterminer qu'une quantité de cellules voisines dont les résultats de mesure satisfont à la première condition atteint un premier seuil N lorsque le temporisateur est dans un état de fonctionnement ; et
l'unité d'envoi (503) est spécifiquement configurée pour rapporter le rapport de mesure au dispositif de réseau, dans lequel le rapport de mesure comprend les résultats de mesure des N cellules voisines, et N est un entier positif, dans lequel le temporisateur est configuré en fonction des informations de configuration de temporisateur, et le premier seuil N est prédéfini ou est indiqué par le dispositif de réseau (80).

9. Appareil de communication (50) selon la revendication 8, dans lequel l'unité de traitement (502) est spécifiquement configurée pour :
déclencher le temporisateur lorsqu'un résultat de mesure d'une cellule voisine satisfait à la première condition.
